(19) Europäisches Patentamt
European Patent Office
Office européen des brevets

(11) EP 1 721 926 B1

(12) EUROPÄISCHE PATENTSCHRIFT

(45) Veröffentlichungstag und Bekanntmachung des Hinweises auf die Patenterteilung:
**01.07.2009 Patentblatt 2009/27**

(51) Int Cl.:
***C08J 3/03*** *(2006.01)* ***C08L 83/04*** *(2006.01)*
***C08G 77/26*** *(2006.01)*

(21) Anmeldenummer: **06009264.0**

(22) Anmeldetag: **04.05.2006**

(54) **Verfahren zur Herstellung von Dispersionen von vernetzten Organopolysiloxanen**

Process for the production of dispersions of cross linked organopolysiloxanes

Procédé pour la fabrication de dispersions à base d’organopolysiloxanes réticulés

(84) Benannte Vertragsstaaten:
**BE DE FR GB NL**

(30) Priorität: **12.05.2005 DE 102005022100**

(43) Veröffentlichungstag der Anmeldung:
**15.11.2006 Patentblatt 2006/46**

(73) Patentinhaber: **Wacker Chemie AG**
**81737 München (DE)**

(72) Erfinder: **Schneider, Otto, Dr.**
**84489 Burghausen (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 655 475** **EP-A- 0 828 794**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Dispersionen von vernetzten Organopolysiloxanen. Weiterhin betrifft die Erfindung Dispersionen von vernetzten Organopolysiloxanen. Weiterhin betrifft die Erfindung daraus hergestellte Formkörper.

Zur Herstellung von Polysiloxanen mit hoher Viskosität existiert eine Reihe von Methoden. Aus US 5,942,574 ist die Herstellung von Emulsionen aus hochviskosen Ausgangsstoffen bis 10 000 000 mPa·s bekannt. Dazu werden jedoch speziell konstruierte, schwere Extruder benötigt. Die entstehenden Emulsionen sind sehr grobteilig und wenig stabil. Diese Emulsionen enthalten hochviskose, jedoch nicht vernetzte Silicone.

Emulsionen von vernetzten Siliconen sind ebenfalls bekannt.
Für die Vernetzung der Silicone werden (Schwer)Metall-haltige oder Metall-freie Katalysatoren sowie Vernetzer benötigt. Teilweise werden zur Steuerung der Reaktivität und Topfzeit auch Inhibitoren verwendet, um ein unerwünschtes zu frühes Vergelen zu verhindern.

Gemäß US 5,001,187 wird OH-endständiges Polydimethylsiloxan in Emulsion unter sauren Bedingungen polymerisiert, und unter Zugabe einer Zinnverbindung und nach Abdampfen von Wasser entsteht innerhalb von 7 Tagen ein Elastomerfilm.
US 2001/0027233 A1 beschreibt eine ähnliche Herstellung des Elastomers aus einem 2-Komponenten-System. In der einen Emulsion ist OH-endständiges Polydimethylsiloxan und der Vernetzer emulgiert. Die zweite Emulsion enthält den Zinn-Katalysator. Nach dem Mischen der beiden Emulsionen reagieren die Komponenten unter Zinn-Katalyse. Es entsteht eine Suspension mit vernetzten Partikeln mit niedrigerer Teilchengröße und einer besseren Verteilbarkeit in Harzen.

US 4,894,412 beschreibt eine selbstvernetzende Aminosiloxan-Emulsion, die in einer mehrere Verfahrensschritte umfassenden 3-tägigen, basenkatalysierten Reaktion bei 70 °C unter Verwendung von sieben Komponenten hergestellt wird. Nach dem Abtrocknen des Wassers wird ein flexibler, gummiartiger Film erhalten.

EP 0 874 017 B1 beansprucht Kettenverlängerungsreaktionen unter Metallkatalyse. Die erhaltenen Silicone sind Öle mit Viskositäten bis 75 000 000 $mm^2$/sec, jedoch keine harten oder elastomeren Filme oder Pulver.

Wasserbasierende RTV-1-Mischungen werden ebenfalls mit Metall-haltigen Katalysatoren versetzt, um eine hohe Reaktivität, schnelle Filmbildung, usw. zu erhalten, wie dies z.B. in US 5,861,459 beschrieben ist. Um weitere gewünschten Eigenschaften des Elastomerfilms zu erhalten, wie z.B. Haftung, sind eine Vielzahl von Zusatzstoffen wie aminofunktionelle Organopolysiloxane oder spezielle Siliconharze erforderlich, die selbst wiederum aufwändig hergestellt werden müssen.

Metall-freie wässrige RTV-1-Dispersionen bestehen - wie in EP 828 794 B1 ausgeführt - zumindest aus den 3 Komponenten:

1. kondensationsfähige Gruppen aufweisende Organopolysiloxane,
2. als Vernetzer fungierende (aminfreie) Organosiliciumverbindungen mit mindestens 3 vernetzungsreaktiven Gruppen,
3. basische, N-haltige Organosiliciumverbindung, ferner Emulgator(en) und Wasser zum Bilden der Dispersion.
EP 655 475 B1 benennt als Vernetzermoleküle spezielle Siliconharze.

Diese Übersicht zeigt, dass die Zusammensetzung bzw. Herstellung von Silicon-Emulsionen, die beim Eintrocknen ein hartes oder elastomeres Silicon-Netzwerk ausbilden, unbefriedigend ist. Die Emulsionen vernetzbarer Silicone sind in Rezeptur und Herstellverfahren komplex aufgebaut und bestehen typischerweise aus einer Vielzahl von benötigten Komponenten. Durch die variierenden Eigenschaften der einzelnen Komponenten sowie durch die gegenseitigen Einflüsse in der herzustellenden Emulsion, ist eine konstante Qualität des vernetzten Silicons in der Emulsion schwierig zu erreichen. Ferner sind Katalysatoren, insbesondere Metall-haltige Katalysatoren, sowie Lösemittel aufgrund ihrer toxikologischen, ökologisch oder sonstigen ungünstigen Eigenschaften, wie Beeinträchtigung der Lagerstabilität der Emulsion, unerwünscht.

In DE-A 2500020 ist ein Verfahren zur Herstellung von Aminosiloxanen beschrieben, bei dem silanolterminierte Polysiloxane mit $\alpha$-Aminosilanen, die eine Alkoxygruppe tragen, umgesetzt werden. Die Reaktion läuft bei moderaten Temperaturen unter Abspaltung von Alkohol ab. Nach diesem Verfahren werden nur endgestopperte und keine vernetzten Organopolysiloxane erhalten.

Es bestand daher die Aufgabe, Dispersionen vernetzter harter oder elastomerer Organopolysiloxane sowie ein einfaches und sicher durchzuführendes Verfahren zur Herstellung dieser Dispersionen bereitzustellen, bei dem die vorstehend genannten Nachteile vermieden werden. Ferner sollten diese Dispersionen beim Verdampfen des Wassers harte oder elastomere Filme oder Pulver bilden, die gute Haftung auf unterschiedlichen Substraten aufweisen.
Weiterhin bestand die Aufgabe, Emulsionen von vernetzten Organopolysiloxanen bereitzustellen, die Si-C gebundene Reste mit basischem Stickstoff enthalten.

Ferner sollte das Verfahren keinen separat durchzuführenden chemischen Reaktionsschritt enthalten, insbesondere keine unter Erwärmung ablaufende Reaktion, und nur von wenigen Ausgangsstoffen ausgehen.
Weiterhin bestand die Aufgabe, Dispersionen von vernetzten Organopolysiloxanen bereitzustellen, die feinteilig, stabil und bevorzugt pH-neutral (Bereich pH ca. 5 - 8) sind.
Weiterhin bestand die Aufgabe, Dispersionen von vernetzten Organopolysiloxanen bereitzustellen, die frei oder nahezu frei von flüchtigen organischen Verbindungen (VOC) sind.
Die Aufgabe wird durch die Erfindung gelöst.

Gegenstand der Erfindung ist ein Verfahren zur Herstellung von Dispersionen von vernetzten Organopolysiloxanen, indem Siloxane ausgewählt aus der Gruppe von Siloxanen (1) aus Einheiten der allgemeinen Formel

$$A_aR_bX_cSiO_{\frac{4-(a+b+c)}{2}} \qquad (I)$$

wobei

**R** ein Wasserstoffatom oder einen einwertigen, Kohlenwasserstoffrest mit 1 bis 200 Kohlenstoffatomen, vorzugsweise 1 bis 18 Kohlenstoffatomen, der mit Halogen-, Amin-, Ammonium-, Mercapto-, Acrylat- oder Maleinimidgruppen substituiert sein kann,

**X** einen Rest der allgemeinen Formel $-OR^1$, ein Chloratom, einen Rest der Formel $-O^-$, wobei als Ausgleich der Ladungen Protonen und/oder organische bzw. anorganische ionische Substanzen vorhanden sein können,
oder einen Rest der allgemeinen Formel II

$$-(R^2)_h-[OCH_2CH_2]_e[OC_3H_6]_f[OC_4H_8]_gOR^3 \qquad (II),$$

wobei

**R¹** ein Wasserstoffatom oder einen Kohlenwasserstoffrest mit 1 bis 200 Kohlenstoffatomen, vorzugsweise 1 bis 18 Kohlenstoffatomen, der durch ein oder mehrere gleiche oder verschiedene Heteroatome, die ausgewählt werden aus O, S, N und P, unterbrochen sein kann,

**R²** einen zweiwertigen Kohlenwasserstoffrest mit 1 bis 200 Kohlenstoffatomen, vorzugsweise 2 bis 10 Kohlenstoffatomen, der durch ein oder mehrere Gruppen der Formeln -C(O)-,-C(O)O-, $-C(O)NR^1$, $-NR^1-$, $-N+HR^1-$, -O-, -S- unterbrochen und/ oder mit F, Cl oder Br substituiert sein kann,

**R³** eine Bedeutung von **R¹** haben kann, oder einen Rest der Formeln $-C(O)R^1$ oder $-Si(R^1)_3$,

**A** einen Rest der allgemeinen Formel III

$$-R^4(B)_z \qquad (III),$$

wobei

**R⁴** einen zwei-, drei- oder vierwertigen Kohlenwasserstoffrest mit 3 bis 200 Kohlenstoffatomen je Rest, vorzugsweise 3 bis 18 Kohlenstoffatomen je Rest, der durch ein oder mehrere Gruppen der Formeln -C(O)-, -C(O)O-, $-C(O)NR^5$, $-NR^5-$, $-N+HR^5-$, $-N+R^5R^5-$, -O-, -S-, -(HO) P (O)- oder -(NaO) P (O)- unterbrochen und/ oder mit F, Cl oder Br substituiert sein kann, wobei

**R⁵** ein Wasserstoffatom oder einen Kohlenwasserstoffrest mit 1 bis 200 Kohlenstoffatomen je Rest, vorzugsweise 1 bis 18 Kohlenstoffatomen, der durch ein oder mehrere Gruppen der Formeln -C(O)-, -C(O)O-, -C (O)$NR^1$-, $-NR^1-$, $-N^+HR^1-$, $-N^+R^1R^1-$,-O- oder -S- unterbrochen und/oder mit F, Cl oder Br substituiert sein kann,

**B** eine Bedeutung von **R⁵** haben kann oder einen Rest, der ausgewählt wird aus -COO-, $-SO_3^-$, $-OPO_3H^{(2-y)-}$ $-N^+R^5R^5R^5$, $-P^+R^5R^5R^5$, $-NR^5R^5$, -OH, -SH, F, Cl, Br, -C (O) H, -COOH, $-SO_3H$, $-C_6H_4-OH$ und $-C_mF_{2m+1}$,

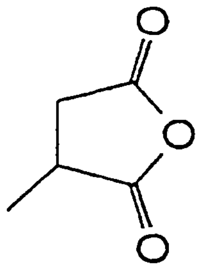
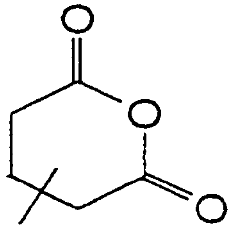
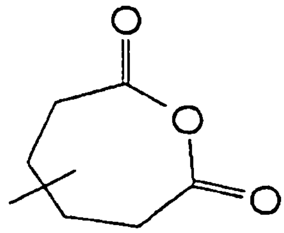

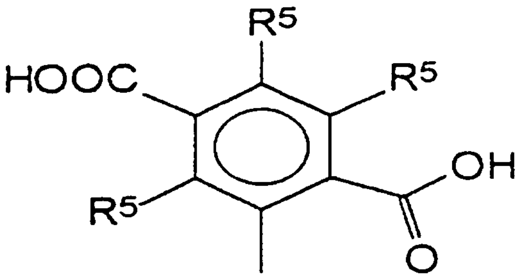

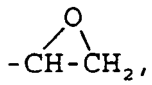

$-C(O)-CR^1=CH_2$, $-O-C(O)-CR^1=CH_2$, $-C_6H_4-(H_2)_x-CR^1=CH_2$,

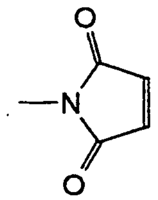
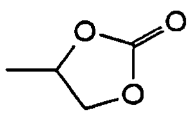
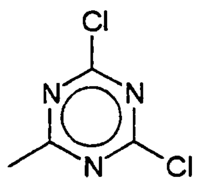

| | |
|---|---|
| **x** | eine ganze Zahl von 1-20, |
| **y** | die Werte 0 oder 1, |
| **z** | je nach Wertigkeit von **$R^4$** die Werte 1, 2 oder 3, |
| **h** | die Werte 0 oder 1, |
| **m** | eine ganze Zahl von 1-20, |
| **a, b und c** | jeweils die Werte 0, 1, 2 oder 3 haben, mit der Maßgabe, dass Summe **$a + b + c \leq 3$** ist, und |
| **e, f und g** | jeweils eine ganze Zahl von 0-200 bedeuten, mit der Maßgabe, dass die Summe **$e + f + g$** > 1 ist, |

mit der Maßgabe, dass mindestens ein Rest A je Molekül enthalten ist und dass mindestens ein Rest X in der Bedeutung von X gleich einem Rest $-OR^1$, wobei $R^1$ ein Wasserstoffatom bedeutet, je Molekül enthalten ist, Siloxanen (2) aus Einheiten der allgemeinen Formel

$$R_b(OR^1)_dSiO_{\frac{4-(b+d)}{2}} \qquad (VI)$$

wobei R, $R^1$, und b die oben dafür angegebene Bedeutung haben und d die Werte 0 oder 1 annehmen kann, mit der Maßgabe, dass die Summe $b+d \leq 3$ ist und mindestens ein Rest $R^1$ in der Bedeutung von $R^1$ gleich Wasserstoffatom

je Molekül enthalten ist,
und den Mischungen aus Siloxanen (1) und (2),
mit Silanen (3) der allgemeinen Formel

$$WR_pSi(OR^7)_{3-p} \qquad (VII)$$

oder deren Teilhydrolysate

**W** ein Rest der Formel $-CH_2NHR^8$, $-CH_2NR^8_2$ oder $-CH_2NR^9$ ist, wobei $R^8$ einen einwertigen, gegebenenfalls N- und/oder O-Atome enthaltenden Kohlenwasserstoffrest mit 1 bis 18 Kohlenstoffatomen und $R^9$ einen zweiwertigen gegebenenfalls N- und/oder O-Atome enthaltenden Kohlenwasserstoffrest mit 3 bis 12 Kohlenstoffatomen bedeuten,
**R** die oben dafür angegeben Bedeutung hat
**$R^7$** einen Alkylrest mit 1 bis 8 Kohlenstoffatomen je Rest und
**p** 0, 1 oder 2, vorzugsweise 0 oder 1, bevorzugt 0 ist,

in Gegenwart von Dispersionsmitteln (4), vorzugsweise Wasser, und Emulgatoren (5) und gegebenenfalls weiteren Stoffen (6), die an der Umsetzung nicht direkt teilnehmen, vorzugsweise wassermischbaren oder nicht wassermischbaren Flüssigkeiten und/oder wasserlöslichen oder wasserunlöslichen Feststoffen umgesetzt werden,
mit der Maßgabe, dass keine Metall-haltigen Katalysatoren mitverwendet werden, und dass Siloxane (1) und/oder (2) und Silane (3) in Art und Menge so gewählt werden, dass Organopolysiloxane erhalten werden, die vernetzt sind und daher in Toluol unlöslich sind.

Weiterhin können die Siloxane (1) und/oder (2) gegebenenfalls Einheiten der allgemeinen Formeln (IV) und (V) enthalten,

$$O_{(4-i-k-1)/2}R_iX_kSi\text{-}A^1\text{-}SiX_kR_iO_{(4-i-k-1)/2} \qquad (IV),$$

$$O_{(4-i-k-1)/2}R_iX_kSi\text{-}A^2\text{-}SiX_kR_iO_{(4-i-k-1)/2} \qquad (V),$$
$$\qquad \llcorner\; SiX_kR_iO_{(4-i-k-1)/2}$$

wobei

**$A^1$** einen zweiwertigen Rest **$R^2$** darstellt,
**$A^2$** einen dreiwertigen Kohlenwasserstoffrest mit 1 bis 200 Kohlenstoffatomen, vorzugsweise 1 bis 18 Kohlenstoffatomen, bedeutet, der durch Reste der Formeln -C(O)-, -C(O)O-, $-C(O)NR^5$, $-NR^5-$, $-N^+HR^5-$, $-N^+R^5R^5-$, -O-, -S-, -N- oder $-N^+R^5-$ unterbrochen und/oder mit F, Cl oder Br substituiert sein kann,
**i** und **k** jeweils die Werte 0, 1 oder 2 bedeuten, mit der Maßgabe, dass **i** + **k** ≤ 2 ist und
**R** und **X** die oben angegebenen Bedeutungen haben.

Als Ausgleich der Ladungen in den Resten **A,** $A^1$, $A^2$, **$R^2$,** $R^4$, $R^5$, B und **X** können gegebenenfalls Protonen und/oder organische bzw. anorganische ionische Substanzen vorhanden sein, wie z.B. Alkalimetall-, Erdalkalimetall-, Ammonium-Ionen, Halogenid-, Sulfat-, Phosphat-, Carboxylat-, Sulfonat-, Phosphonat-Ionen.

Gegenstand der Erfindung sind weiterhin Dispersionen, vorzugsweise Emulsionen, von vernetzten Organopolysiloxanen enthaltend vernetzte Organopolysiloxane aus Einheiten der allgemeinen Formel

$$A_aR_bW_n(OR^1)_dSiO_{\frac{4-(a+b+d+n)}{2}} \qquad (VIII)$$

wobei A, R, $R^1$, W, a, b und d die oben dafür angegebene Bedeutung haben,
n 0 oder 1 ist,
mit der Maßgabe, dass die Summe a+b+d+n ≤ 3 ist und a und n in derselben Siloxaneinheit nicht gleichzeitig 1 sind und dass durchschnittlich je Molekül mindestens ein Rest W enthalten

ist,
Dispersionsmittel (4), vorzugsweise Wasser, und
Emulgatoren (5), und
gegebenenfalls weitere Stoffe (6), die an der Umsetzung nicht direkt teilnehmen,
mit der Maßgabe, dass keine Metall-haltigen Katalysatoren enthalten sind und dass die Organopolysiloxane vernetzt sind und daher in Toluol unlöslich sind.

Die erfindungsgemäßen vernetzten Organopolysiloxane weisen hochmolekulare verzweigte oder dendrimerartige hochverzweigte Strukturen auf, wobei durch diese Vernetzung harte oder elastomere Verbindungen entstehen, somit eine Viskositätsmessung nicht möglich ist und die typischerweise in organischen Lösemitteln, wie Toluol, unlöslich sind, jedoch eventuell darin quellen, was aber ebenfalls im Rahmen dieser Erfindung als unlöslich zu verstehen ist.
Im Gegensatz dazu sind bei unvernetzten flüssigen Organopolysiloxanen, die auch hochviskos sein können, Viskositätsmessungen möglich. Kennzeichnend bei unvernetzten Organopolysiloxanen ist deren Löslichkeit in organischen Lösemitteln, wie z.B. Toluol.

Die erfindungsgemäßen vernetzten Organopolysiloxane können verzweigte, dendrimerartige hochverzweigte oder vernetzte Strukturen aufweisen. Diese vernetzten Organopolysiloxane können aus der Dispersion als harte oder elastomere Formkörper, wie Filme, isoliert werden.

Vorzugsweise sind die erfindungsgemäßen Dispersionen wässrige Suspensionen oder wässrige Emulsionen von vernetzten Organopolysiloxanen.

Die erfindungsgemäßen Dispersionen von vernetzten Organopolysiloxanen bilden beim Eintrocknen - ohne Katalysatorzugabe oder Veränderung des pH-Wertes - ein hartes oder elastisches Siliconnetzwerk aus. Bei der Herstellung der erfindungsgemäßen vernetzten Organopolysiloxane werden vorzugsweise nur OH-endständige Polyorganosiloxane und schnell reagierende Vernetzer benötigt, und diese Komponenten reagieren vorzugsweise bei Raumtemperatur miteinander. Zur Unterstützung dieser Reaktion werden keine Metall-haltigen zusätzlichen Katalysatoren benötigt. Die Reaktion verläuft ferner vorzugsweise im neutralen Bereich, d.h. im pH-Bereich von ca. 5 bis 8, der sich durch die Komponenten selbst ergibt. Durch die hohe Reaktivität ist ferner eine gezielt geführte chemische Umsetzung nicht nötig und vorzugsweise auch keine Erwärmung. Optional können diese Dispersionen weitere Zusätze (6) enthalten wie z.B. wassermischbare oder nicht wassermischbare Flüssigkeiten, silicon- oder nicht siliconhaltige Emulsionen, weitere Silane oder Silicone z.B. als Haftvermittler, sowie wasserlösliche oder wasserunlösliche Feststoffe, insbesondere wasserunlösliche Feststoffe, die als verstärkende oder nicht verstärkende Füllstoffe dienen.

Die erfindungsgemäße Dispersion zeichnet sich durch ihre hohe Lagerstabilität, auch bei erhöhter Temperatur, und durch ihre hohe Scherstabilität aus. Das erfindungsgemäße Verfahren hat den Vorteil, dass Dispersionen niedriger Viskosität bei gleichzeitig hohem Festgehalt und Füllstoffgehalt erhalten werden können.

Bei dem erfindungsgemäßen Verfahren werden keine Metall-haltigen Katalysatoren verwendet, d.h. es werden vorzugsweise keine Übergangsmetalle der VIII. Nebengruppe des Periodensystems und deren Verbindungen und keine Metalle der III., IV. und V. Hauptgruppe des Periodensystems und deren Verbindungen verwendet, wobei die Elemente C, Si, N, und P in dieser Definition nicht als Metalle gelten.

Dass nach dem erfindungsgemäßen Verfahren wässrige Dispersionen von vernetzten Organopolysiloxanen erhalten werden können, war überraschend, da in A. Adima et al., Eur. J. Org. Chem. 2004, 2582-2588 beschrieben ist, dass sich $\alpha$-Aminomethyltrialkoxysilane in Gegenwart von Wasser zu $SiO_2$ und dem entsprechenden methylierten Amin zersetzen.

Beispiele für Kohlenwasserstoffreste **R** sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octyl-rest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Bevorzugt sind als Rest **R** das Wasserstoffatom oder der Methyl-, Ethyl-, Octyl- und Phenylrest, besonders bevorzugt sind das Wasserstoffatom oder der Methyl- und Ethylrest.

Beispiele für halogenierte Reste **R** sind Halogenalkylreste, wie der 3,3,3-Trifluor-n-propylrest, der 2, 2, 2, 2', 2', 2'-Hexafluorisopropylrest, der Heptafluorisopropylrest und Halogenarylreste, wie der o-, m- und p-Chlorphenylrest.

Beispiele für Rest $\mathbf{R^1}$ sind die vorstehend bei **R** aufgeführten Alkylreste sowie der Methoxyethyl- und der Ethoxyethylrest,
wobei es sich bei dem Rest $\mathbf{R^1}$ bevorzugt um Wasserstoff und um Alkylreste mit 1 bis 18 Kohlenstoffatomen, die durch Sauerstoffatome unterbrochen sein können, besonders bevorzugt um Wasserstoff und den Methyl- und den Ethylrest handelt.

Beispiele für organische oder anorganische Substanzen zum Ausgleich der Ladungen für X = $-O^-$ sind,

Alkali- und Erdalkaliionen, Ammonium- und Phosphoniumionen
sowie ein- oder zweiwertige Metallionen, bevorzugt sind Alkaliionen, besonders bevorzugt $Na^+$ und $K^+$.

Beispiele für Reste **X** sind der Hydroxy-, Methoxy- oder Ethoxyrest und Reste der allgemeinen Formel (II), wie

$-(CH_2)_3-(OCH_2CH_2)_3-OCH_3$, $-(CH_2)_3-(OCH_2CH_2)_6-OCH_3$,

$-(CH_2)_3-(OCH_2CH_2)_{35}-OCH_3$,

$-(CH_2)_3-(OCH(CH_3)CH_2)_3-OCH_3$, $-(CH_2)_3-(OCH(CH_3)CH_2)_6-OCH_3$,

$-(CH_2)_3-(OCH(CH_3)CH_2)_{35}-OCH_3$, $-(CH_2)_3-(OCH_2CH_2)_3-(OCH(CH_3)CH_2)_3-OCH_3$,

$-(CH_2)_3-(OCH_2CH_2)_6-(OCH(CH_3)CH_2)_6-OCH_3$,

$-(CH_2)_3-(OCH_2CH_2)_{35}-(OCH(CH_3)CH_2)_{35}-OCH_3$,

$-(CH_2)_3-(OCH_2CH_2)_3-OSi(CH_3)_3$, $-(CH_2)_3-(OCH_2CH_2)_6-OSi(CH_3)_3$,

$-(CH_2)_3-(OCH_2CH_2)_{35}-OSi(CH_3)_3$,

$-(CH_2)_3-(OCH_2CH_2)_3-OC(O)CH_3$, $-(CH_2)_3-(OCH_2CH_2)_6-OC(O)CH_3$,

$-(CH_2)_3-(OCH_2CH_2)_{35}-OC(O)CH_3$,

$-(OCH_2CH_2)_3-OH$, $-(OCH_2CH_2)_6-OH$, $-(OCH_2CH_2)_{35}-OH$,

$-(OCH(CH_3)CH_2)_3-OH$, $-(OCH(CH_3)CH_2)_6-OH$,

$-(OCH(CH_3)CH_2)_{35}-OH$, $-(OCH_2CH_2)_3-(OCH(CH_3)CH_2)_3-OH$,

$-(OCH_2CH_2)_6-(OCH(CH_3)CH_2)_6-OH$,

$-(OCH_2CH_2)_{35}-(OCH(CH_3)CH_2)_{35}-OH$;

$-(OCH_2CH_2)_{18}-(O(CH_2)_4)_{18}-OH$

$-(OCH_2CH_2)_3-OCH_3$, $-(OCH_2CH_2)_6-OCH_3$, $-(OCH_2CH_2)_{35}-OCH_3$,

$-(OCH(CH_3)CH_2)_3-OCH_3$, $-(OCH(CH_3)CH_2)_6-OCH_3$,

$-(OCH(CH_3)CH_2)_{35}-OCH_3$, $-(OCH_2CH_2)_3-(OCH(CH_3)CH_2)_3-OCH_3$,

$-(OCH_2CH_2)_6-(OCH(CH_3)CH_2)_6-OCH_3$,

$-(OCH_2CH_2)_{35}-(OCH(CH_3)CH_2)_{35}-OCH_3$,

$-(OCH_2CH_2)_3-OSi(CH_3)_3$, $-(OCH_2CH_2)_6-OSi(CH_3)_3$,

$-(OCH_2CH_2)_{35}-OSi(CH_3)_3$,

$-(OCH_2CH_2)_3-OC(O)CH_3$, $-(OCH_2CH_2)_6-OC(O)CH_3$,

$-(OCH_2CH_2)_{35}-OC(O)CH_3$,

$-(OCH_2CH_2)_3-OH$, $-(OCH_2CH_2)_6-OH$, $-(OCH_2CH_2)_{35}-OH$,

$-(OCH(CH_3)CH_2)_3-OH$, $-(OCH(CH_3)CH_2)_6-OH$,

$-(OCH(CH_3)CH_2)_{35}-OH$, $-(OCH_2CH_2)_3-(OCH(CH_3)CH_2)_3-OH$,

$-(OCH_2CH_2)_6-(OCH(CH_3)CH_2)_6-OH$,

$-(OCH_2CH_2)_{35}-(OCH(CH_3)CH_2)_{35}-OH$

und

$-(OCH_2CH_2)_{18}-(O(CH_2)_4)_{18}-OH$.

Beispiele für Reste **$R^2$** sind lineare oder verzweigte, substituierte oder unsubstituierte Kohlenwasserstoffreste mit vorzugsweise 2 bis 10 Kohlenstoffatomen, wobei gesättigte oder ungesättigte Alkylenreste bevorzugt sind und der Ethylen- oder der Propylenrest besonders bevorzugt sind.

Beispiele für Reste **$R^3$** sind die vorstehend bei **R** aufgeführten Alkyl- und Arylreste und Reste der Formel -C(O)$R^1$ oder -Si($R^1$)$_3$, wobei der Methyl-, Ethyl-, Propyl- und Butyl- sowie Trialkylsilyl- und -C(O)-Alkylrest bevorzugt sind und der Methyl, Butyl-, $-C(O)-CH_3$ und der Trimethylsilylrest besonders bevorzugt sind.

Beispiele für **$R^4$** sind Reste der Formeln

$-(CH_2)_3-$

$-(CH_2)_3-O-CH_2-$

$-(CH_2)_3-O-(CH_2-CH_2O)_n-$

$-(CH_2)_3-O-CH_2-CH(OH)-CH_2-$

$-(CH_2)_3-NH-(CH_2)_2-$

$-(CH_2)_3-NH-C(O)-$

$-(CH_2)_3-NH-(CH_2)_2-C(O)-O-$

$-(CH_2)_3-NH-(CH_2)_2-C(O)-O-(CH_2)_2-$

$-(CH_2)_3-NH-(CH_2)_2-NH-C(O)-CH=CH-$

$-(CH_2)_3-NH-C(O)-CH=CH-$

$-(CH_2)_3-C_6H_4-$

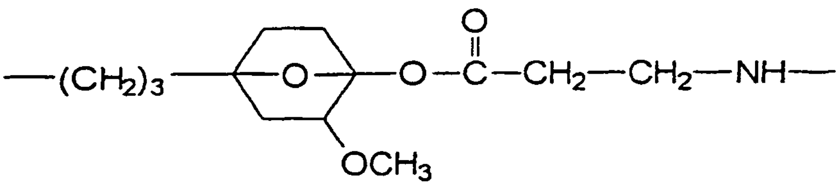

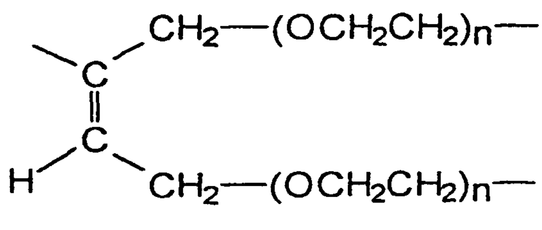

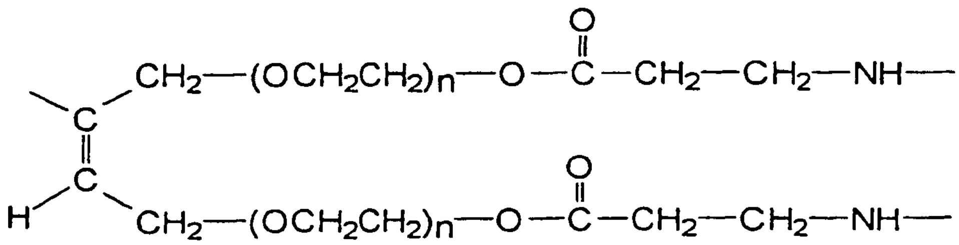

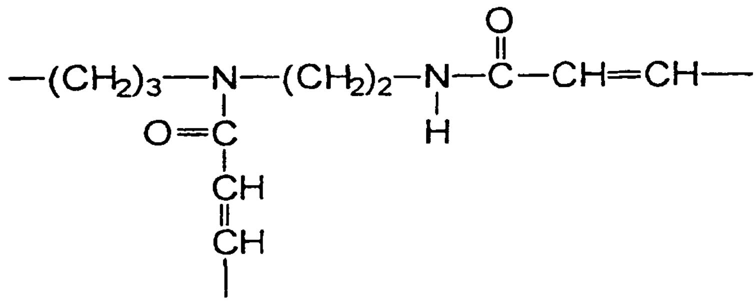

Bevorzugt für $\mathbf{R^4}$ sind Reste der Formeln

$-(CH_2)_3-$

$-(CH_2)_3-NH-(CH_2)_2-$

$-(CH_2)_3-O-CH_2-CH(OH)-CH_2-$

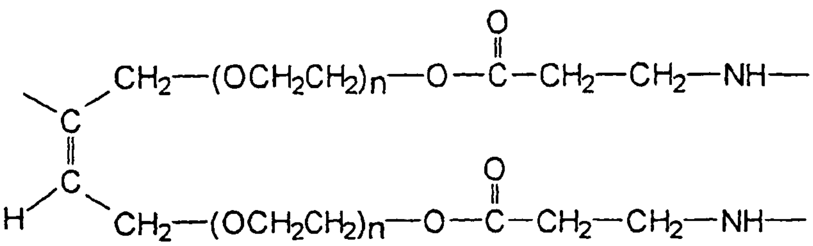

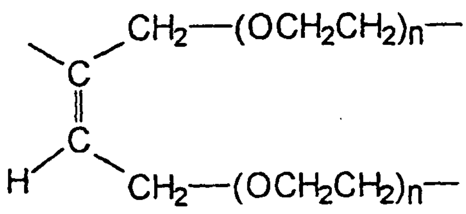

Besonders bevorzugt als $\mathbf{R^4}$ sind $-(CH_2)_3-$ und $-(CH_2)_3-NH-(CH_2)_2-$.

Beispiele für $\mathbf{R^5}$ sind die vorstehend bei **R** aufgeführten Alkyl- und Arylreste und Reste der Formeln

$-C(O)-CH_3$

$-(CH_2CH_2O)_3-CH_3$, $-(CH_2CH_2O)_6-CH_3$, $-(CH_2CH_2O)_{35}-CH_3$,

$-(CH(CH_3)CH_2O)_3-CH_3$, $-(CH(CH_3)CH_2O)_6-CH_3$,

$-(CH(CH_3)CH_2O)_{35}-CH_3$, $-(CH_2CH_2O)_3-$ $(CH(CH_3)CH_2O)_3-CH_3$,

$-(CH_2CH_2O)_5-(CH_2-CH(CH_3)O)_5-CH_3$,

$-(CH_2CH_2O)_{10}-$ $(CH_2-CH(CH_3)O)_{10}-CH_3$,

$-(CH_2CH_2O)_3-Si(CH_3)_3$, $-(CH_2CH_2O)_6-Si(CH_3)_3$, $-(CH_2CH_2O)_{35}-Si(CH_3)_3$,

$-(CH_2CH_2O)_5-(CH_2-CH\ (CH_3)O)_5-Si(CH_3)_3$,

$-(CH_2CH_2O)_{10}-(CH_2-CH(CH_3)O)_{10}-Si(CH_3)_3$,

$-(CH_2CH_2O)_3-C(O)CH_3$, $-(CH_2CH_2O)_6-C(O)CH_3$, $-(CH_2CH_2O)_{35}-C(O)CH_3$,

$-(CH_2CH_2O)_5-(CH_2-CH(CH_3)O)_5-C(O)CH_3$,

$-(CH_2CH_2O)_{10}-(CH_2-CH(CH_3)O)_{10}-C(O)CH_3$,

$-(CH_2CH_2O)_3-H$, $-\ (CH_2CH_2O)_6-H$, $-(CH_2CH_2O)\ _{35}-H$,

$-(CH(CH_3)CH_2O)_3-H$, $-(CH\ (CH_3)\ CH_2O)_6-H$,

$-(CH(CH_3)CH_2O)_{35}-H$, $-(CH_2CH_2O)_3-$ $(CH(CH_3)CH_2O)_3-H$,

$-(CH_2CH_2O)_5-$ $(CH_2-CH\ (CH_3)\ O)_5-H$,

$-(CH_2CH_2O)_{10}-(CH_2-CH\ (CH_3)O)_{10}-H$

und

$-(CH_2CH_2O)_{18}-$ $((CH_2)_4O)_{18}-H$.

Bevorzugt als Rest $\mathbf{R^5}$ sind das Wasserstoffatom und Alkyl- und Arylreste, besonders bevorzugt sind das Wasserstoffatom und Alkylreste.

Beispiele für Reste **B** sind $-COONa$, $-SO_3Na$, $-COOH$, $-SH$ und insbesondere $-OH$, $-NH_2$, $-NH-CH_3$, $-NH-(C_6H_{11})$ und $-N-(CH_2-CH=CH_2)_2$, wobei $-NH_2$, $-NH-CH_3$ und $-NH-(C_6H_{11})$ besonders bevorzugt sind.

Beispiele für Alkylreste $\mathbf{R}^7$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octyl-rest und iso-Octylreste, wie der 2,2,4-Trimethylpentylrest.

Bevorzugte Beispiele für Reste **A** sind daher solche der Formel

$-(CH_2)_3-NH_2$,

$-(CH_2)_3-NH-CH_3$

$-(CH_2)_3-NH-C_6H_{11}$

und

$-(CH_2)_3-NH-$ $(CH_2)_2-NH_2$.

Beispiele für $\mathbf{A^1}$ sind lineare oder verzweigte, zweiwertige Alkylreste mit vorzugsweise 2 bis 20 Kohlenstoffatomen, oder Reste der Formeln

$-(CH_2)_3-NH-(CH_2)_3-$, $-(CH_2)_3-NR^5-(CH_2)_3-$

$-(CH_2)_3-(CH_2-CH_2O)_e-(CH_2)_3-$

$-O-(CH_2-CH_2O)_e-$

wobei e die oben dafür angegebene Bedeutung hat.

Ein Beispiel für **$A^2$** ist $N[(CH_2)_3-]_3$.

Bevorzugt werden als Siloxane (1) solche der allgemeinen Formel

$$(R^1O)\ R_2SiO(SiR_2O)_r(SiRAO)_sSiR_2\ (OR^1) \qquad (IX)$$

wobei A, R und $R^1$ die oben dafür angegebene Bedeutung haben,
s eine ganze Zahl von 1 bis 30 ist und
r 0 oder eine ganze Zahl von 1 bis 1000 ist,
mit der Maßgabe, dass 25 bis 100 %, vorzugsweise 50 bis 100 % aller Reste $R^1$ Wasserstoffatome sind,
eingesetzt.

Als Siloxane (2) werden bevorzugt solche der allgemeinen Formel

$$(R^1O)R_2SiO(SiR_2O)_tSiR_2(OR^1) \qquad (X)$$

wobei R und $R^1$ die oben dafür angegebene Bedeutung haben und t eine ganze Zahl von 1 bis 1000 ist,
mit der Maßgabe, das 25 bis 100 %, vorzugsweise 50 bis 100 % aller Reste $R^1$ Wasserstoffatome sind,
sowie solche Siloxane (Harze) der allgemeinen Formel

$$[(R_3SiO_{1/2})_q\ (R_2SiO_{2/2})_u\ (R_1SiO_{3/2})_v\ (SiO_{4/2})_w] \qquad (XI)$$

wobei R die oben dafür angegebene Bedeutung haben und zusätzlich R in Formel (XI) auch gleich ein Rest der Formel $-OR^1$ sein kann (wobei $R^1$ die oben dafür angegebene Bedeutung hat), mit der Maßgabe, dass mindestens ein Rest $-OR^1$, wobei $R^1$ ein Wasserstoffatom bedeutet, je Molekül enthalten ist,
q, u, v, w eine ganze Zahl von 0 bis 1000 und
v/(q+u+v+w) bevorzugt > 0,2 ist,
eingesetzt.

Besonders bevorzugt werden Siloxane (2) eingesetzt.

Beispiele für Siloxane (1) sind handelsübliche funktionalisierte Siloxane, wie Aminöle, z.B. Aminöle mit 3-(2-Aminoethyl)aminopropylfunktionen, Glykolöle, Phenyl- oder Phenylmethylöle, die Silanolgruppen enthalten.

Beispiele für Siloxane (2) sind handelsübliche Polydimethylsiloxane mit endständigen Silanolgruppen.

Weitere Beispiele für (2) sind harzartige Siloxane, z..B. Methylsiliconharze, mit 80 Mol% $CH)SiO_{3/2}$ und 20 Mol% $(CH_3)_2SiO_{2/2}$ und einer Molmasse von ca. 5000g/Mol oder 98 Mol% $CH_3SiO_{3/2}$ und 2 Mol% $(CH_3)_2SiO_{2/2}$ und einer Molmasse von ca. 5000g/Mol, oder z.B. Methylphenylsiliconharze mit 65 Mol% $C_6H_5SiO_{3/2}$ und 35 Mol% $(CH_3)_2SiO_{2/2}$, deren restliche freie Valenzen $R^1O$-Gruppen der o.g. Bedeutung tragen.

Diese Verbindungen werden in großen Mengen kommerziell erzeugt und sind sehr kostengünstig zugänglich, wodurch das erfindungsgemäße Verfahren wirtschaftlich besonders attraktiv ist.

Die Organopolysiloxane (1) und (2) weisen vorzugsweise Viskositäten von 1 mPa.s bis 50.000.000 mPa.s bei 25°C, bevorzugt 50 mPa.s bis 10.000.000 mPa.s bei 25°C und besonders bevorzugt 100 mPa.s bis 500.000 mPa.s bei 25°C auf.

Beispiele für Reste W sind Hydroxymethyl, Methoxymethyl, Ethoxymethyl, 2-Ethoxyethoxymethyl, 2-Butoxyethoxymethyl, Acetoxymethyl, Mercaptomethyl, Ethylthiomethyl, Dodecylthiomethyl, Aminomethyl, Methylaminomethyl, Dimethylaminomethyl, Diethylaminomethyl, Dibutylaminomethyl, Cyclohexylaminomethyl, Anilinomethyl, 3-Dimethylaminopropylaminomethyl, Bis(3-dimethylaminopropyl)aminomethyl, N-Morpholinomethyl, Piperazinomethyl, Piperidinomethyl, ((Diethoxymethylsilyl)methyl)cyclohexylaminomethyl, ((Triethoxysilyl)methyl)cyclohexylaminomethyl, Diethylphosphinomethyl, Dibutylphosphinomethyl, sowie Gruppen der Formeln $-CH_2NHCOR^8$, $-CH_2NHCO_2R^8$ oder $-CH_2NHCONHR^8$, wobei $R^8$ die oben dafür angegebene Bedeutung hat.

Beispiele für Kohlenwasserstoffreste R gelten im vollen Umfang für Kohlenwasserstoffreste $R^8$.

Ein bevorzugtes Beispiel für $R^9$ ist der Rest der Formel $-CH_2-CH_2-O-CH_2-CH_2-$ .

Beispiele für Silane (3) sind
2-Butoxyethoxymethyltrimethoxysilan, Methoxymethyl-methyldiethoxysilan,
Diethylaminomethyl-methyldimethoxysilan,
Dibutylaminomethyltriethoxysilan,
Dibutylaminomethyltributoxysilan,

Cyclohexylaminomethyltrimethoxysilan,
Cyclohexylaminomethyltriethoxysilan,
Cyclohexylaminomethyl-methyldiethoxysilan,
Anilinomethyltriethoxysilan,
Anilinomethyl-methyldiethoxysilan,
Morpholinomethyltriethoxysilan,
Morpholinomethyltrimethoxysilan,
Morpholinomethyltriisopropoxysilan,
3-Dimethylaminopropyl-aminomethyltrimethoxysilan,
Acetylaminomethylmethyldimethoxysilan,
Ethylcarbamoylmethyltrimethoxysilan,
(Isocyanatomethyl)triethoxysilan,
(Isocyanatomethyl)trimethoxysilan (Methacryloxymethyl)triethoxysilan,
(Methacryloxymethyl)trimethoxysilan,
Chlormethyltriethoxysilan,
Chlormethyltrimethoxysilan,
Morpholinomethyltributoxysilan,
Morpholinomethyltrialkoxysilan, wobei der Alkoxyrest ein $C_1$-$C_4$-Alkoxyrest ist, insbesondere ein Gemisch aus Methoxy- und Ethoxyrest ist,
Bis-(dimethylaminopropyl)aminomethyl-triethoxysilan,
Diisopropylaminomethyltriethoxysilan,
Diethylphosphonatomethyltrimethoxysilan,
Piperazinomethyltriethoxysilan,
Piperidinomethyltriethoxysilan,
Bis-(diethoxymethylsilylmethyl)cyclohexylamin,
Bis-(triethoxysilylmethyl)cyclohexylamin,
Mercaptomethyltriethoxysilan,
Morpholinomethyltri(2-hydroxyethoxy)silan.

Bevorzugt sind dabei Silane (3), die eine Trialkoxy-Gruppe tragen, d.h. bei denen p in Formel (VII) 0 ist.

Bei dem erfindungsgemäßen Verfahren werden Silane (3) vorzugsweise in Mengen von 0,001 bis 10 Gew.-% bevorzugt 0,01 bis 5,0 Gew.-%, besonders bevorzugt 0,1 bis 3,0 Gew.% jeweils bezogen auf Siloxan (1) und Siloxan (2) eingesetzt.

Die Herstellung der erfindungsgemäßen Dispersionen vernetzter Organopolysiloxane erfolgt durch intensives Mischen von Siloxanen aus der Gruppe der Siloxane (1) und Siloxane (2), Silanen (3) Dispersionsmitteln (4), vorzugsweise Wasser, und Emulgatoren (5) und gegebenenfalls weiteren Stoffen (6) miteinander.
Die Herstellung kann diskontinuierlich oder kontinuierlich erfolgen.

Technologien zur Herstellung von Dispersionen oder Emulsionen von Organopolysiloxanen sind bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Obwohl die Silane (3) bekanntermaßen hydrolyseempfindliche Gruppen enthalten, besonders wenn $R^3$ ein Methyl- oder Ethylrest ist, werden selbst in Gegenwart von Wasser überraschenderweise vernetzte Organopolysiloxane durch Kondensation mehrerer Siloxane (1) oder/und Siloxane (2) erhalten.

Die Art der Mischung der Komponenten, die zur Herstellung der erfindungsgemäßen Dispersionen gebraucht werden, ist nicht sehr kritisch und kann in verschiedener Reihenfolge ausgeübt werden. In Abhängigkeit von den Komponenten (1), (2), (3), (4) und (5), ggf. und (6), können sich aber unterschiedliche Vorgehensweisen ergeben.

Es können z.B. die Komponenten (1) und/oder (2) und (3) miteinander vorgemischt werden, daraufhin der (oder die) Emulgator(en) zugefügt und danach das Dispersionsmittel und ggf. weitere Stoffe (6) eingearbeitet werden. Es ist auch möglich, die Komponenten (1) bis (5) bzw. bis (6) der Reihe nach in die Emulgierapparatur zu dosieren. In besonderen Fällen kann es z.B. aufgrund der Siloxanviskosität oder -reaktivität vorteilhaft sein, Silan (3) mit Siloxan (1) zu mischen und danach Siloxan (2) einzuarbeiten, oder umgekehrt, je nachdem, wie sich günstigere rheologische Eigenschaften für Verarbeitung der Komponenten ergeben.

Bei sehr reaktiven Silanen (3) kann es vorteilhaft sein, erst die Komponente (1) und/oder (2) mit Emulgator (5) und dem Dispersionsmittel (4) in eine steife Phase überzuführen, und danach das Silan (3) pur oder verdünnt in einem inerten Stoff (6) einzudosieren, bevor eine Phasenumkehr und damit z.B. eine Öl-in-Wasser-Dispersion erhalten wird.

Bei dem erfindungsgemäßen Verfahren wird Dispersionsmittel (4), bevorzugt Wasser, in Mengen von vorzugsweise 1 bis 99 Gew.-%, besonders bevorzugt 5 bis 95 Gew.-%, jeweils bezogen auf das Gesamtgewicht aller Inhaltsstoffe

der Dispersion eingesetzt.

Bei dem erfindungsgemäßen Verfahren können als Emulgatoren (5) alle bisher bekannten, ionischen und nichtionischen Emulgatoren sowohl einzeln als auch als Mischungen verschiedener Emulgatoren eingesetzt werden, mit denen auch bisher wässrige Dispersionen, insbesondere wässrige Emulsionen von Organopolysiloxanen hergestellt werden konnten. Ebenso können bekanntermaßen anorganische Feststoffe als Emulgatoren (5) eingesetzt werden. Dies sind z.B. Kieselsäuren oder Bentonite, wie in EP 1017745 A oder DE 19742759 A beschrieben.

Beispiele für anionische Emulgatoren sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.
Beispiele für nichtionische Emulgatoren sind:

5. Polyvinylalkohol, der noch 5 bis 50 %, vorzugsweise 8 bis 20 %, Vinylacetateinheiten aufweist, mit einem Polymerisationsgrad von 500 bis 3000.

6. Alkylpolyglycolether, vorzugsweise solche mit 3 bis 40 EO-Einheiten und Alkylresten von 8 bis 20 C-Atomen.

7. Alkylarylpolyglycolether, vorzugsweise solche mit 5 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*\text{-O-}Z_o$, worin $R^*$ einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen, enthaltend insbesondere die Elemente O, N, C, S, P, enthaltende lineare Organo(poly)siloxane, insbesondere solche mit Alkoxygruppen mit bis zu 24 C-Atomen und/oder bis zu 40 EO- und/oder PO-Gruppen.
Beispiele für kationische Emulgatoren sind:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether.
Der Bestandteil (5) kann aus einem der o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen Lösungsmitteln eingesetzt werden.

Bei dem erfindungsgemäßen Verfahren werden die Emulgatoren (5) in Mengen von vorzugsweise 0,1 bis 60 Gew.-%, besonders bevorzugt 0,5 bis 30 Gew.-%, jeweils bezogen auf das Gesamtgewicht an Siloxanen (1) und/oder (2) und Silane (3), eingesetzt.

Falls die Organosiliciumverbindungen (1), (2) oder (3) bzw. die entstehenden vernetzten Organosiliciumverbindungen selbst als Emulgatoren wirken, kann auf den Zusatz von separatem Emulgator (5) verzichtet werden.

Beispiele für wassermischbare Flüssigkeiten, die als weitere Stoffe (6) eingesetzt werden können, sind Säuren wie z.B. Ameisensäure, Essigsäure, Propionsäure, Phosphorsäure, Salzsäure, Schwefelsäure oder Basen wie z.B. Triethylamin, Triethanolamin, Trioctylamin, ferner Ethylen- oder Polyethylenglykol, 1,2-Propandiol, 1,3-Propandiol, Polypropylenglykol, Diethylenglykolmonobutylether oder Glycerin. Desweiteren können Dispersionen oder Emulsionen als weitere Stoffe (6) eingesetzt werden, z.B. im Handel erhältliche Dispersionen wie Styrol-Butadien-Latex, Acryl-, Vinyl-, Polyurethan-, oder Polyethylendispersionen sowie Emulsionen natürlicher oder synthetischer Öle, Harze oder Wachse, wie z.B. Carnaubawachs-, Bienenwachs-, Wollwachs-, Aloe Vera-, Vitamin E-, Paraffinöl-, unreaktive Siliconöl-, unreaktive Siliconharz-, Jojobaöl-, Reisöl-, Calendulaöl-, Teebaumöl-, Rosenöl- oder Melissenöl-Emulsionen. Ferner können als weitere Stoffe (6) handelsübliche Konservierungsmittel für Dispersionen wie z.B. Isothiazolinone oder Parabene, bzw. deren wässrigen Formulierungen, zugesetzt werden.

Die Dispersionen können als Dispersionen unverdünnter vernetzter Organopolysiloxane hergestellt werden, jedoch empfiehlt sich manchmal aus Handhabungsgründen eine Verdünnung mit organischen Lösungsmitteln oder niedrig viskosen Oligomeren/Polymeren.

Beispiele für nicht wassermischbare Flüssigkeiten, die als weitere Stoffe (6) eingesetzt werden können, sind daher organische Lösungsmittel, wie Toluol, n-Hexan, n-Heptan und technische Benzinfraktionen und niedrig viskose Oligomere/Polymere, bevorzugt Siloxane, wie Dimethylpolysiloxane.

Beispiele für wasserlöslich Feststoffe, die als weitere Stoffe (6) eingesetzt werden können, sind z.B. anorganische Salze wie Alkali- oder Erdalkalihalogenide, -sulfate, -phosphate, -hydrogenphosphate, z.B. Natriumchlorid, Kaliumsulfat, Magnesiumbromid, Calciumchlorid, Ammoniumchlorid, Ammoniumcarbonat, oder Salze von $C_1$- bis $C_8$-Carbonsäuren wie Alkali- oder Erdalkalisalze, z.B. Natriumacetat.

Beispiele für wasserunlösliche Feststoffe, die als weitere Stoffe (6) eingesetzt werden können, sind verstärkende und nicht verstärkende Füllstoffe. Beispiele für verstärkende Füllstoffe, also Füllstoffe mit einer BET-Oberfläche von mindestens 50 $m^2/g$, sind pyrogen hergestellte Kieselsäure, gefällte Kieselsäure oder Silicium-Aluminium-Mischoxide mit einer BET-Oberfläche von mehr als 50 $m^2/g$. Die genannten Füllstoffe können hydrophobiert sein. Beispiele für nicht verstärkenden Füllstoffe, also Füllstoffe mit einer BET-Oberfläche von weniger als 50 $m^2/g$, sind Pulver aus Quarz, Kreide, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide oder Titandioxid, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln.

Der Emulgiervorgang zur Herstellung der Dispersion wird vorzugsweise bei Temperaturen unter 120°C, bevorzugt bei 5°C bis 100°C, besonders bevorzugt bei 10°C bis 80°C durchgeführt. Die Temperaturerhöhung kommt vorzugsweise durch den Eintrag mechanischer Scherenergie, die für den Emulgierprozess benötigt wird, zustande. Die Temperaturerhöhung wird nicht zur Beschleunigung eines chemischen Prozesses benötigt. Weiterhin wird das erfindungsgemäße Verfahren vorzugsweise beim Druck der umgebenden Atmosphäre durchgeführt, kann aber auch bei höheren oder niederen Drücken durchgeführt werden.

Die vernetzten Organopolysiloxane können je nach Einsatz von Di- oder Trialkoxysilan (3) und linearem, verzweigtem oder harzartigem Siloxan (1) und/oder (2) verzweigte oder sogar hochverzweigte/stark vernetzte Strukturen mit linearen Anteilen haben.

Werden Dialkoxysilane (3) mit rein linear aufgebauten Siloxanen (1) und/oder (2), die maximal 2 SiOH-Funktionen pro Molekül enthalten, insbesondere mit den Siloxanen der Formeln (IX) und (X), umgesetzt, werden lineare hochviskose Organopolysiloxane, und keine erfindungsgemäßen vernetzten Organopolysiloxane erhalten. Die Umsetzung von Siloxanen (1) und/oder (2), die mehr als 2 OH-Funktionen, insbesondere mindestens 3 OH-Funktionen, pro Molekül enthalten, mit Dialkoxysilanen (3) führt dagegen zu vernetzten Siloxanpolymeren.

Werden als Silane (3) Trialkoxysilane eingesetzt, was bevorzugt ist, werden erfindungsgemäße vernetzte Organopolysiloxane erhalten. Ferner werden auch bei Einsatz von Gemischen aus Dialkoxysilanen (3) und Trialkoxysilanen (3), insbesondere bei Einsatz von Gemischen aus 1 - 99 Gew.% Dialkoxysilanen (3) und 1 - 99 Gew.% Trialkoxysilanen (3), bevorzugt 10 - 90 Gew.% Dialkoxysilanen (3) und 10 - 90 Gew.% Trialkoxysilanen (3), erfindungsgemäße vernetzte Organopolysiloxane erhalten.

Der Vernetzungsgrad hängt dabei vom eingesetzten Verhältnis der Äquivalente $-OR^7$ in Silan (3) zu $-OR^1$ in Siloxan (1) und/oder (2) ab.
Silan (3) wird dabei in solchen Mengen eingesetzt, dass vorzugsweise mindestens 0,6 Äquivalente $-OR^7$, bevorzugt mindestens 0,7 Äquivalente $-OR^7$, besonders bevorzugt 0,6 bis 5 Äquivalente $-OR^7$, insbesonders 0,65 bis 2 Äquivalente $-OR^7$, insbesonders bevorzugt 0,7 bis 1,5 Äquivalente $-OR^7$, je Äquivalent $-OR^1$ in Siloxan (1) und/oder (2) vorliegen, wobei $R^1$ bevorzugt ein Wasserstoffatom ist.

Monofunktionelles Monoalkoxysilan reagiert als Kettenendstopper und kann dann zusätzlich zu Trialkoxysilanen oder zu Gemischen von Trialkoxy- und Dialkoxysilanen eingesetzt werden, wenn gewünscht ist, dass Gruppen "W" am Ende von Siloxanketten sitzen sollen. Bevorzugt wird es nicht eingesetzt.

Das erfindungsgemäße Verfahren hat den Vorteil, dass es ohne Zusatz von Katalysatoren, insbesondere ohne Zusatz von Metallkatalysatoren abläuft. Die Umsetzung von (1) und/oder (2) mit (3) läuft vorzugsweise in wenigen Minuten bis mehreren Stunden vollständig ab, wobei auch hier Methoxysilane schneller als Ethoxysilane reagieren. Die Kondensation kann allerdings durch Säuren und Basen beschleunigt werden, was aber nicht bevorzugt ist.

Die bei dem erfindungsgemäßen Verfahren als Kondensationsnebenprodukte anfallenden Alkohole können im Produkt verbleiben oder auch entfernt werden, beispielsweise durch Destillation unter Vakuum oder durch Extraktion.

Die mittels Lichtstreuung in den Dispersionen gemessene mittlere Teilchengröße liegt im Bereich 0,001 bis 100 $\mu$m, bevorzugt bei 0,002 bis 10 $\mu$m. Die pH-Werte können von 1 bis 14 variieren, bevorzugt 3 bis 9, besonders bevorzugt 5 bis 8.

Gegenstand der Erfindung sind weiterhin Formkörper durch Entfernung des Dispersionsmittels (4), vorzugsweise Wasser, von den erfindungsgemäßen Dispersionen, vorzugsweise Emulsionen. Vorzugsweise wird dabei das Wasser durch Trocknen lassen der erfindungsgemäßen Dispersionen bei einer Temperatur von ca. 1 bis 200°C, bevorzugt 5 bis 150°C, besonders bevorzugt im Temperaturbereich der umgebenden Atmosphäre, also bei ca. 10 bis 30°C, entfernt.
Die Trocknungszeit beträgt dabei je nach Dicke des Formkörpers vorzugsweise 0,1 bis 100 Stunden, bevorzugt 0,2 bis 48 Stunden.

Es kann sich bei den Formkörpern um harte oder elastomere Formkörper handeln. Bevorzugt handelt es sich um Beschichtungen oder freistehende Formkörper, wie freistehende Filme. Es können auch harte oder elastomere Pulver erhalten werden, indem das Dispersionsmittel (4), vorzugsweise Wasser, durch Sprühtrocknung, Wirbelbetttrocknung oder Gefriertrocknung von den Dispersionen entfernt wird.

Gegenstand der Erfindung ist weiterhin ein Verfahren zur Herstellung von Beschichtungen, indem die erfindungsgemäße Dispersion auf ein Substrat aufgetragen wird und das Dispersionsmittel (4), vorzugsweise Wasser, entfernt wird. Vorzugsweise wird die Dispersion auf dem Substrat trocknen gelassen.

Im Gegensatz zu Beschichtungen haften freistehende Filme nicht auf dem Substrat, auf dem sie erzeugt wurden, und können von dem Substrat abgezogen werden.

Gegenstand der Erfindung ist weiterhin ein Verfahren zur Imprägnierung oder Infiltration von Substraten, indem die erfindungsgemäße Dispersion auf ein Substrat aufgetragen wird, das Substrat oder deren Oberfläche imprägniert oder infiltriert wird und das Dispersionsmittel (4), vorzugsweise Wasser, entfernt wird.
Vorzugsweise wird die Dispersion auf dem Substrat trocknen gelassen.
Bei den Substraten können die erfindungsgemäßen Dispersionen im wesentlichen auf der Oberfläche verbleiben und das Substrat wird imprägniert, die Dispersionen können aber auch tiefer in das Substrat eindringen und es handelt sich um eine Infiltration.

Das Auftragen von den erfindungsgemäßen Dispersionen auf die zu beschichtenden Substrate bzw. die zu imprägnierenden oder zu infiltrierenden Substrate bzw. deren Oberflächen kann in beliebiger, für die Herstellung von Beschichtungen bzw. Imprägnierungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder RakelBeschichtung oder mittels einer Luftbürste.

Die Schichtdicke auf den zu beschichtenden Substraten beträgt vorzugsweise 0,01 bis 10.000 $\mu$m, besonders bevorzugt 0,1 bis 100 $\mu$m.

Beispiele für Substrate, die mit den erfindungsgemäßen Dispersionen beschichtet bzw. imprägniert bzw. infiltriert werden können, sind Papier, Holz, Kork, Kunststoffe und Kunststofffolien, wie Polyethylenfolien oder Polypropylenfolien, mit Polyethylen beschichtetes Papier und Pappen, natürliche oder synthetische Fasern, gewebtes und ungewebtes Tuch aus natürlichen oder synthetischen Fasern, Textilien, keramische Gegenstände, Glas, einschließlich Glasfasern, Stein, Beton und Metalle.

Die erfindungsgemäßen Dispersionen können weiterhin als Silicondichtmassen, als PSA (= pressure sensitive adhesives) und in Körperpflegemitteln verwendet werden.

Beispiel 1

In einem Ultra-Turrax T 50 Emulgiergerät (Fa. Janke & Kunkel) wird aus 5 g Isotridecyldecaethoxylat, 85 %ig in Wasser, käuflich erwerblich unter dem Handelsnamen Lutensol TO 109 (Fa. BASF), und 8 g entsalztes Wasser ein Emulgatorgemisch hergestellt, zu dem 100 g eines frisch hergestellten homogenen Siloxan-Polymer/Silangemisches, bestehend aus 99,65 g Polydimethylsiloxandiol mit einem Gehalt an terminalen OH-Gruppen von 1100 Gew.-ppm als Siloxan (2) und 0,35 g N-Morpholinomethyl-triethoxysilan als Silan (3), dosiert wird. Es wird dann mit insgesamt 90,1 g vollentsalztem Wasser portionsweise verdünnt, worauf man eine michig-weiße Emulsion mit einer durchschnittlichen Teilchengröße von 309 nm erhält. Der Festgehalt der Emulsion beträgt 50,7 %, der pH-Wert 6,0. Die Emulsion ist auch nach 6-monatiger Lagerung bei Raumtemperatur homogen und stabil.

Durch Eindampfen der Emulsion wird nach einer Trockenzeit von 24h/25°C ein gelartig elastischer, auf Glas oder Aluminium gut haftender Film erhalten, der klebende Eigenschaften aufweist.

Beispiele 2 bis 6

Weitere Emulsionen werden analog Beispiel 1 hergestellt, wobei die in der folgenden Tabelle angegebenen Mengen verwendet werden:

Tabelle :

| Beispiel | Siloxan (1) in g | Siloxan (2) in g | Silan (3) in g | Festgehalt (%) | pH | Teilchen -größe (nm) | Filmbeurteilung nach Trocknung 24 h/25°C |
|---|---|---|---|---|---|---|---|
| B2 | -- | 99,56 (2a) | 0,44 | 50,5 | 7 | 478 | sehr elastisch, transparent |
| B3 | -- | 99,40 (2a) | 0,60 | 49,9 | 7 | 481 | elastisch, transparent |
| B4 | -- | 99,22 (2a) | 0,79 | 50,5 | 6,5 | nb* | elastisch, opak, wenig Haftung |
| B5 | -- | 94,0 (2a) | 6,0 | 49,8 | 8 | nb* | wenig elastisch, opak |
| B6 | 20,0 (1a) | 80,0 (2a) | 0,37 | 52,0 | 7 | 2810 | sehr elastisch, transparent klebrig |
| * nb = nicht bestimmt | | | | | | | |

Der Festgehalt wird bestimmt bei 150°C bis zur Gewichtskonstanz mit Gerät: Mettler Toledo HR 73.

Die Teilchengrößen werden bestimmt mit Coulter N4 plus.

Als Siloxan (1a) wird verwendet:

Copolymer aus 3-(2-Aminoethylamino)propyl-methylsiloxy- und Dimethylsiloxyeinheiten mit einer Aminzahl von 0,145, einer Viskosität von 4700 $mm^2/s$ (bei 25°C) und einem Endgruppenverhältnis von OH/OMe = 54/46.

Als Siloxan (2a) wird verwendet:
Polydimethylsiloxandiol mit einem Gehalt an terminalen OH-Gruppen von 1100 Gew.-ppm.

Als Silan (3) wird verwendet:
N-Morpholinomethyl-triethoxysilan

Die Elastizität der aus der Emulsion hergestellten Filme nimmt mit zunehmender Menge an Silan (3) von B2 nach B5 ab.

Der aus Dispersion B3 hergestellte Elastomerfilm wird auseinandergeschnitten und 24 h in Toluol eingelegt. Die Schnittkanten sind danach immer noch scharf ausgebildet. Der Film ist gequollen, aber in Toluol unlöslich.

Beispiel 7

In einem Ultra-Turrax T 50 Emulgiergerät (Fa. Janke & Kunkel) wird aus 2,5 g Isotridecyldecaethoxylat (Lutensol TO 109, Fa. BASF), und 8 g Wasser ein Emulgatorgemisch hergestellt, zu dem 99 g eines frisch hergestellten homogenen Siloxan-/Silangemisches aus 97,56 g Polydimethylsiloxandiol (2a), 1,0 g Siloxan (1a) und 0,44 g N-Morpholinomethyltriethoxysilan dosiert wird. Es wird dann mit insgesamt 8,9 g Wasser portionsweise verdünnt, worauf man eine pastenartige, standfeste, milchig-weiße Emulsion erhält. Der Festgehalt der Emulsion beträgt 86,3 %. Die Emulsionspaste ist auch nach 8-monatiger Lagerung bei Raumtemperatur homogen und stabil.

Durch Eindampfen der Emulsion bei 25°C tritt bereits nach 45 Minuten Hautbildung ein, nach 5 Stunden ist nahezu ein kompakter Film entstanden. Nach 24h/25°C wird ein elastischer, auf Glas, Papier oder Aluminium haftender Film erhalten. Die Messwerte nach DIN 53504-85, Normstab S3A, betragen:

Reißdehnung 680 %, Spannungswert bei 100 % Dehnung 0,11 N/$mm^2$.

Die Emulsionspaste ist als Fugendichtmasse geeignet.

Beispiel 8

In einem Ultra-Turrax T 50 Emulgiergerät (Fa. Janke & Kunkel) wird aus 4 g Isotridecylpentadecaethoxylat käuflich erwerblich unter dem Handelsnamen Lutensol TO 15 (Fa. BASF), und 8 g Wasser ein Emulgatorgemisch hergestellt, zu dem 100 g eines frisch hergestellten homogenen Siloxan-/Silangemisches aus 97,05 g eines Siliconharzes (29-Si-NMR: 72,7 Mol% $CH_3SiO_{3/2}$, 1,6 Mol% $(CH_3)_2SiO_{2/2}$ und 25,7 Mol% $(CH_3)_3SiO_{1/2}$; OH-Gehalt nach Zerewitinow: 5,8 Gew.%; Viskosität 2640 $mm^2$/s bei 25°C) und 3,0 g Cyclohexylaminomethyltriethoxysilan dosiert wird. Es wird dann mit insgesamt 89,9 g Wasser portionsweise verdünnt, worauf man milchig-weiße Emulsion erhält. Der Festgehalt der Emulsion beträgt 47,9 %. Die Emulsion ist auch nach 5-monatiger Lagerung bei Raumtemperatur homogen und stabil.

Durch Eindampfen der Emulsion wird innerhalb von 24h/25°C ein wenig elastischer, harter, transparenter, auf Glas, Papier, Aluminium oder Beton hervorragend haftender Film erhalten.

Beispiel 9

Analog Beispiel 1 wird eine Dispersion unter Verwendung folgender Komponenten hergestellt:

5 g Isotridecyldecaethoxylat (Lutensol TO 109, Fa. BASF);
8 g vollentsalztes Wasser;
100,65 g eines Siloxan-/Silangemisches, frisch hergestellt aus 97,5 g Siloxan (2b) (= Polydimethylsiloxandiol mit einem Gehalt an terminalen OH-Gruppen von 740 Gew.-ppm), 0,45 g N-Morpholinomethyltriethoxysilan, und zusätzlich als Stoff (6) 2,5 g N-(2-Aminoethyl)(3-aminopropyl)methyldimethoxysilan; 90,1 g vollentsalztes Wasser.

Es entsteht eine milchig-weiße Emulsion. Der Festgehalt der Emulsion beträgt 52,7 %, der pH-Wert 8,5. Die Emulsion ist auch nach 3-monatiger Lagerung bei Raumtemperatur homogen und stabil.

Durch Eindampfen der Emulsion wird innerhalb von 24h/25°C ein elastischer, auf Glas, Papier oder Aluminium gut haftender Film erhalten. Die Siliconabdeckung durch diesen Film ist auf Papier einwandfrei und zeigt gegenüber handelsüblichen Klebeetiketten gute Trenneigenschaften.

Beispiel 10

Analog Beispiel 1 wird eine Dispersion unter Verwendung folgender Komponenten hergestellt:

8,1 g teilhydrophobierte Kieselsäure, hergestellt nach EP 1 433 749 A1, dispergiert in 43,9 g vollentsalztem Wasser,
99,0 g eines Siloxan-/Silangemisches, frisch hergestellt aus 1,0 g Siloxan (1a), 97,56 g Siloxan (2a), 0,44 g N-Morpholinomethyltriethoxysilan,
45,8 g vollentsalztes Wasser.

Es entsteht eine milchig-weiße Emulsion. Der Festgehalt der Emulsion beträgt 52,1 %, der pH-Wert 5,5. Die Emulsion ist auch nach 3-monatiger Lagerung bei Raumtemperatur homogen und stabil.

Durch Eindampfen der Emulsion wird nach einer Trockenzeit von 24h/25°C ein elastischer, auf Glas und Aluminium haftender Film erhalten.

Beispiel 11

Analog Beispiel 1 wird eine Dispersion unter Verwendung folgender Komponenten hergestellt:

8,25 g Isotridecylpentaethoxylat (Lutensol TO 5, Fa. BASF);
10,34 g Isotridecyldecaethoxylat (Lutensol TO 109, Fa. BASF); 16,5 g Tagat S (1:1 in Wasser), (Fa. Goldschmidt AG) 724,0 g eines Siloxan-/Silangemisches, frisch hergestellt aus 720,2 g Siloxan (2a), 3,98 g N-Morpholinomethyltriethoxysilan; 596,5 g vollentsalztes Wasser.

Es entsteht eine milchig-weiße Emulsion. Der Festgehalt der Emulsion beträgt 53,8 %, der pH-Wert 6,5. Die Emulsion ist auch nach 6-monatiger Lagerung bei Raumtemperatur homogen und stabil.

Durch Eindampfen der Emulsion wird nach einer Trockenzeit von 24h/25°C ein elastischer, opaker Film erhalten.

Beispiel 12

Emulsion A:

Analog Beispiel 1 wird eine Dispersion unter Verwendung folgender Komponenten hergestellt:

5 g Isotridecyldecaethoxylat (Lutensol TO 109, Fa. BASF);
8 g vollentsalztes Wasser;
100,0 g eines Siloxan-/Silangemisches, frisch hergestellt aus 94 g Siloxan (2) (Trimethylsilyl-endgestoppertes Polydimethylsiloxan mit einer Viskosität von 98 $mm^2/s$ bei 25°C) und 6,0 g N-Morpholinomethyltriethoxysilan;
90,0 g vollentsalztes Wasser.

Emulsion B:

Analog Beispiel 1 wird eine Dispersion unter Verwendung folgender Komponenten hergestellt:

5 g Isotridecyldecaethoxylat (Lutensol TO 109, Fa. BASF);
8 g vollentsalztes Wasser;
98,0 g Siloxan (2a);
90,0 g vollentsalztes Wasser.

Emulsion A und Emulsion B, die beide milchig-weiß sind, werden im Verhältnis 50:8 Gewichtsteilen gemischt. Durch Eindampfen des Emulsionsgemisches wird nach einer Trockenzeit von 24h/25°C ein elastischer, gut haftender Film erhalten, dessen Oberfläche sich glatt anfühlt.

Beispiel 13

50 Gewichtsteile Emulsion A aus Beispiel 12 werden mit 8 Gewichtsteilen der Emulsion aus Beispiel 5 gemischt. Durch Eindampfen des Emulsionsgemisches wird nach einer Trockenzeit von 3 Tagen/25°C ein elastisch-klebriger, gut haftender Film erhalten.

Beispiel 14

Zur Herstellung einer Mikroemulsion eines aminhaltigen vernetzten Silicons wird zunächst ein homogenes Emulgatorgemisch aus 1,5 g Diethylenglykolmonobutylether, 3,3 g Lutensol TO 5 (Fa. BASF), 0,3 g Marlipal ST 1618/25 (Fa. Sasol GmbH, Marl) und 0,07 g 80%iger Essigsäure bereitet.

In diese Vormischung wird eine frische Lösung, hergestellt aus 0,055 g N-Morpholinomethyltriethoxysilan, 8,0 g Siloxan (1a) und 2,0 g Siloxan (2a) eingerührt und dann langsam mit 14,5 g entionisiertem Wasser verdünnt. Man erhält eine dünnflüssige transparente Mikroemulsion.

Ca. 2 g der Mikroemulsion werden bei 50°C getrocknet. Nach 1 Stunde ist Hautbildung eingetreten. Nach 5 Stunden Trockenzeit bei 50°C ist ein elastisch-klebriger, gut haftender, opaker Silicon-Film entstanden.

Beispiel 15

Zur Herstellung einer Mikroemulsion eines vernetzten Silicons werden 4 g Emulsion gemäß Beispiel 7 mit 1,5

g 1,2-Propandiol vermischt. Es entsteht eine dünnflüssige, nahezu klare Mikroemulsion von vernetztem Silicon.
Durch Eindampfen der Emulsion wird nach einer Trockenzeit von 72h/20°C ein elastischer, opaker Film mit sich trocken anfühlender Oberfläche erhalten.

Beispiel 16

In 96 Gewichtsteile der Emulsion aus Beispiel 7 werden 4 Gewichtsteile einer pyrogen erzeugten hochdispersen hydrophilen Kieselsäure (BET-Oberfläche: 150 $m^2$/g) eingemischt. Es entsteht ein fließfähiges Pulver. Nach einer Trokkenzeit von 4 Stunden/25°C entsteht aus diesem Gemisch ein elastisches Pulver.

Beispiel 17

52 Gewichtsteile der Emulsion aus Beispiel 7 werden mit 34 Gewichtsteile Wasser verdünnt und mit 4,3 Gewichtsteile einer SBR-Dispersion (Typ 85PI6 von Synthomer Ltd., Harlow, GB) als Komponente (6) vermischt.
Durch Eindampfen dieses Gemisches wird nach einer Trockenzeit von 24h/25°C ein elastischer, gut haftender Film auf Glas erhalten.

Beispiel 18

8 Gewichtsteile der Emulsion aus Beispiel 7 werden mit 1 Gewichtsteil einer 10%igen Lösung von Polyvinylalkohol in Wasser (Hydrolysegrad des PVA: 88 %, Viskosität der 10 %igen Lösung bei 25°C: 950 $mm^2$/sec) als Komponente (6) vermischt.
Durch Eindampfen dieses Gemisches wird nach einer Trockenzeit von 24h/25°C ein elastischer, gut haftender Film auf Glas und Aluminium erhalten.

Beispiel 19

Analog Beispiel 1 wird eine Dispersion unter Verwendung folgender Komponenten hergestellt:

2,5 g Isotridecyldecaethoxylat (Lutensol TO 109, Fa. BASF);
8 g vollentsalztes Wasser;
70,15 g eines Siloxan-/Silangemisches, frisch hergestellt aus 69,92 g Siloxan (2c) (= Polydimethylsiloxandiol mit einem Gehalt an terminalen OH-Gruppen von 1900 Gew.-ppm), 0,23 g N-Morpholinomethyltriethoxysilan, und zusätzlich als Stoff (6) 30 g eines trimethylsilylendgestopperten Polydimethylsiloxan mit einer Viskosität von 102 $mm^2$/s bei 25°C;
90,0 g vollentsalztes Wasser.

Es entsteht eine milchig-weiße Emulsion. Der Festgehalt der Emulsion beträgt 51,7 %, der pH-Wert 6,5. Die Emulsion ist auch nach 3-monatiger Lagerung bei Raumtemperatur homogen und stabil.
Durch Eindampfen der Emulsion wird nach einer Trockenzeit von 48h/23°C ein elastischer Film erhalten.

Beispiel 20

Beispiel 1 wird sinngemäß wiederholt mit dem Unterschied, dass anstatt der Mischung aus Siloxan (2a) und Silan (3) nun 69,6 g reines Polydimethylsiloxandiol mit einem Gehalt an terminalen OH-Gruppen von 1100 Gew.-ppm (in Beispiel 1 beschrieben) in drei Portionen und danach 30,39 g einer Lösung von 0,39 g N-Morpholinomethyltriethoxysilan in 30,00 g eines trimethylsilylendgestopperten Polydimethylsiliconöls der Viskosität 350 mPa.s (25°C) in zwei Portionen zugegeben werden. Es folgt die identische Verdünnung mit Wasser.
Bei gleichem Silicon- und Festgehalt hat die Emulsion eine Teilchengröße von 294 nm. Die Emulsion zeigt nach 5 Tagen /50°C keine Veränderung.

Vergleichsversuch 1 (nicht erfindungsgemäß)

Beispiel 1 wird sinngemäß wiederholt mit dem Unterschied, dass statt des in Beispiel 1 verwendeten Siloxan-Polymer/Silangemisches nun 100 g eines frisch hergestellten homogenen Siloxan-Polymer/Silangemisches, bestehend aus 99,65 g Polydimethylsiloxandiol mit einem Gehalt an terminalen OH-Gruppen von 1100 Gew.-ppm und 0,59 g N(2-Aminoethyl)(3-aminopropyl)trimethoxysilan, dosiert werden. Es folgt die identische Verdünnung mit Wasser, worauf man eine milchig-weiße, homogene Emulsion mit einer durchschnittlichen Teilchengröße von 362 nm und einem pH von 7

erhält.

Durch Eindampfen der Emulsion wird auch nach einer Trockenzeit von 12 Tagen/23°C nur ein Öl erhalten, das in Toluol löslich ist, aber kein Film, der elastomere Eigenschaften aufweist

Vergleichsversuch 2 (nicht erfindungsgemäß)

In einem Ultra-Turrax Emulgiergerät T 50 (Fa. Janke & Kunkel) wird aus 9,38 g Isotridecyldecaethoxylat (Lutensol TO 109, Fa. BASF AG), 3,90 g Ricinusölethoxylat G 1300 (Fa. Atlas) und 4,55 g Wasser ein steifes Emulgatorgemisch hergestellt, zu dem 125,28 g eines frisch hergestellten homogenen Polymer/Silangemisches aus 124,63 g Polydimethylsiloxandiol mit einem Gehalt an terminalen OH-Gruppen von 765 Gew.-ppm und 0,86 g N-Morpholylmethylmethyldiethoxysilan dosiert wird. Es wird dann mit insgesamt 106,65 g Wasser portionsweise verdünnt, worauf man eine stabile Emulsion mit einer durchschnittlichen Teilchengröße von 275 nm erhält. Der Silicongehalt der Emulsion beträgt 50 %.

Durch Eindampfen der Emulsion nach einer Standzeit von 24h/25°C und Reextraktion des Siloxanpolymers mit n-Heptan wird nach Verdunsten des Lösemittels ein hochviskoses Polysiloxan mit einer Viskosität von 3400 Pa.s (25°C) erhalten, das in Toluol löslich und damit unvernetzt ist. Die Dispersion, die dieses hochviskose Polysiloxan enthält, ist nicht erfindungsgemäß.

## Patentansprüche

1. Verfahren zur Herstellung von Dispersionen von vernetzten Organopolysiloxanen, indem Siloxane ausgewählt aus der Gruppe von Siloxanen (1) aus Einheiten der allgemeinen Formel

$$A_aR_bX_cSiO_{\frac{4-(a+b+c)}{2}} \qquad (I)$$

wobei

**R** ein Wasserstoffatom oder einen einwertigen, Kohlenwasserstoffrest mit 1 bis 200 Kohlenstoffatomen, der mit Halogen-, Amin-, Ammonium-, Mercapto-, Acrylat- oder Maleinimidgruppen substituiert sein kann,
**X** einen Rest der allgemeinen Formel $-OR^1$, ein Chloratom, einen Rest der Formel $-O^-$, wobei als Ausgleich der Ladungen Protonen und/oder organische bzw. anorganische ionische Substanzen vorhanden sein können, oder einen Rest der allgemeinen Formel II

$$-(R^2)_h-[OCH_2CH_2]_e[OC_3H_6]_f[OC_4H_8]_gOR^3 \qquad (II)$$

wobei
**$R^1$** ein Wasserstoffatom oder einen Kohlenwasserstoffrest mit 1 bis 200 Kohlenstoffatomen, der durch ein oder mehrere gleiche oder verschiedene Heteroatome, die ausgewählt werden aus O, S, N und P, unterbrochen sein kann,
**$R^2$** einen zweiwertigen Kohlenwasserstoffrest mit 1 bis 200 Kohlenstoffatomen, der durch ein oder mehrere Gruppen der Formeln -C(O)-, -C(O)O-, $-C(O)NR^1$, $-NR^1-$, $-N^+HR^1-$, -O-, -S- unterbrochen und/oder mit F, C1 oder Br substituiert sein kann,
**$R^3$** eine Bedeutung von **$R^1$** haben kann, oder einen Rest der Formeln $-C(O)R^1$ oder $-Si(R^1)_3$,
**A** einen Rest der allgemeinen Formel III

$$-R^4(B)_z \qquad (III),$$

wobei
**$R^4$** einen zwei-, drei- oder vierwertigen Kohlenwasserstoffrest mit 3 bis 200 Kohlenstoffatomen je Rest, vorzugsweise 3 bis 18 Kohlenstoffatomen je Rest, der durch ein oder mehrere Gruppen der Formeln -C(O)-,-C(O)O-, $-C(O)NR^5$, $-NR^5-$, $-N^+HR^5-$, $-N^+R^5R^5-$, -O-, -S-,-(HO)P(O) - oder -(NaO)P(O)- unterbrochen und/oder mit F, Cl oder Br substituiert sein kann, wobei
**$R^5$** ein Wasserstoffatom oder einen Kohlenwasserstoffrest mit 1 bis 200 Kohlenstoffatomen je Rest, der durch

ein oder mehrere Gruppen der Formeln -C(O)-, -C(O)O-, -C(O)NR$^1$-, -NR$^1$-, -N$^+$HR$^1$-, -N$^+$R$^1$R$^1$-, -O- oder -S- unterbrochen und/oder mit F, Cl oder Br substituiert sein kann,

**B** eine Bedeutung von **R$^5$** haben kann oder einen Rest, der ausgewählt wird aus -COO-, -SO$_3^-$, -OPO$_3$H$^{(2-y)-}$, -N$^+$R$^5$R$^5$R$^5$,-P$^+$R$^5$R$^5$R$^5$, -NR$^5$R$^5$, -OH, -SH, F, Cl, Br, -C(O)H, -COOH,-SO$_3$H, -C$_6$H$_4$-OH und C$_m$F$_{2m+1}$,

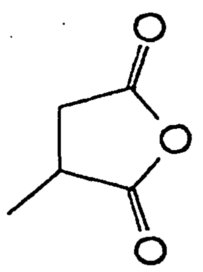
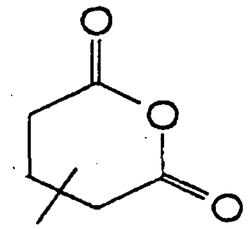
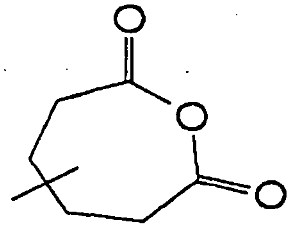

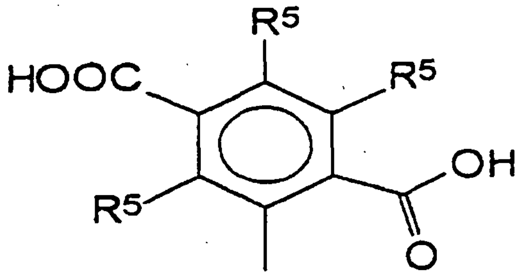

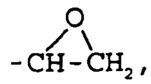

-C(O)-CR$^1$=CH$_2$, -O-C(O)-CR$^1$=CH$^2$, -C$_6$H$_4$-(CH$_2$)$_x$-CR$^1$=CH$_2$,

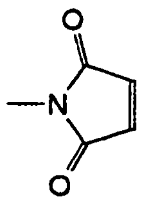
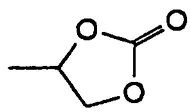
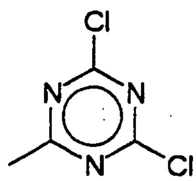

**x** eine ganze Zahl von 1-20,
**y** die Werte 0 oder 1,
**z** je nach Wertigkeit von **R$^4$** die Werte 1, 2 oder 3,
**h** die Werte 0 oder 1,
**m** eine ganze Zahl von 1-20,
**a, b und c** jeweils die Werte 0, 1, 2 oder 3 haben, mit der Maßgabe, dass Summe **a + b + c** $\leq$ **3** ist, und
**e, f und g** jeweils eine ganze Zahl von 0-200 bedeuten, mit der Maßgabe, dass die Summe **e + f + g** > 1 ist, mit der Maßgabe, dass mindestens ein Rest A je Molekül enthalten ist und dass mindestens ein Rest X in der Bedeutung von X gleich einem Rest -OR$^1$, wobei R$^1$ ein Wasserstoffatom bedeutet, je Molekül enthalten ist, Siloxanen (2) aus Einheiten der allgemeinen Formel

$$R_b(OR^1)_dSiO_{\frac{4-(b+d)}{2}} \qquad (VI)$$

wobei R, $R^1$, und b die oben dafür angegebene Bedeutung haben und d die Werte 0 oder 1 annehmen kann, mit der Maßgabe, dass die Summe b+d ≤ 3 ist und mindestens ein Rest $R^1$ in der Bedeutung von $R^1$ gleich Wasserstoffatom je Molekül enthalten ist,
und den Mischungen aus Siloxanen (1) und (2),
mit Silanen (3) der allgemeinen Formel

$$WR_pSi(OR^7)_{3-p} \qquad (VII)$$

oder deren Hydrolyseprodukte
**W** ein Rest der Formel $-CH_2NHR^8$, $-CH_2NR^8_2$ oder $-CH_2NR^9$ ist, wobei $R^8$ einen einwertigen, gegebenenfalls N- und/oder O-Atome enthaltenden Kohlenwasserstoffrest mit 1 bis 18 Kohlenstoffatomen und $R^9$ einen zweiwertigen gegebenenfalls N- und/oder O-Atome enthaltenden Kohlenwasserstoffrest mit 3 bis 12 Kohlenstoffatomen bedeuten,
**R** die oben dafür angegebene Bedeutung hat
**$R^7$** einen Alkylrest mit 1 bis 8 Kohlenstoffatomen je Rest und
**p** 0, 1 oder 2, vorzugsweise 0 oder 1, bevorzugt 0 ist,

in Gegenwart von Dispersionsmitteln (4) und
Emulgatoren (5) und
gegebenenfalls weiteren Stoffen (6), die an der Umsetzung nicht direkt teilnehmen, umgesetzt werden,
mit der Maßgabe, dass keine Metall-haltigen Katalysatoren mitverwendet werden, und
dass Siloxane (1) und/oder (2) und Silane (3) in Art und Menge so gewählt werden, dass Organopolysiloxane erhalten werden, die vernetzt sind und daher in Toluol unlöslich sind.

**2.** Verfahren nach Anspruch 1, **dadurch gekennzeichnet, dass** als Dispersionsmittel (4) Wasser eingesetzt wird.

**3.** Verfahren nach Anspruch 1 oder 2, **dadurch gekennzeichnet, dass** der Rest A ein Rest ausgewählt der Gruppe von

$-(CH_2)_3-NH_2$,

$-(CH_2)_3-NH-CH_3$

$-(CH_2)_3-NH-C_6H_{11}$

und

$-(CH_2)_3-NH-(CH_2)_2-NH_2$

ist.

**4.** Verfahren nach einem der Ansprüche 1 bis 3, **dadurch gekennzeichnet, dass** als Siloxane (1) solche der allgemeinen Formel

$$(R^1O)R_2SiO(SiR_2O)_r(SiRAO)_sSiR_2(OR^1) \qquad (IX)$$

wobei A, R und $R^1$ die in Anspruch 1 dafür angegebene Bedeutung haben,
s eine ganze Zahl von 1 bis 30 ist und
r 0 oder eine ganze Zahl von 1 bis 1000 ist,
mit der Maßgabe, dass 50 bis 100 % aller Reste $R^1$ Wasserstoffatome sind,

eingesetzt werden.

**5.** Verfahren nach einem der Ansprüche 1 bis 4, **dadurch gekennzeichnet, dass** als Siloxane (2) solche der allge-

meinen Formel

$$(R^1O)R_2SiO(SiR_2O)_tSiR_2(OR^1) \qquad (X)$$

wobei R und $R^1$ die im Anspruch 1 dafür angegebene Bedeutung haben und
t eine ganze Zahl von 1 bis 1000 ist,
mit der Maßgabe, dass 50 bis 100 % aller Reste $R^1$ Wasserstoffatome sind,

eingesetzt werden.

6. Verfahren nach einem der Ansprüche 1 bis 5, **dadurch gekennzeichnet, dass** als Silane (3) Trialkoxysilane mit p gleich 0 eingesetzt werden.

7. Verfahren nach einem der Ansprüche 1 bis 6, **dadurch gekennzeichnet, dass** Silan (3) in solchen Mengen eingesetzt wird, dass 0,6 bis 5 Äquivalente $-OR^7$ je Äquivalent $-OR^1$ in Siloxan (1) und/oder (2) vorliegen, wobei $R^1$ ein Wasserstoffatom ist.

8. Dispersionen von vernetzten Organopolysiloxanen enthaltend vernetzte Organopolysiloxane aus Einheiten der allgemeinen Formel

$$A_aR_bW_n(OR^1)_dSiO_{\frac{4-(a+b+d+n)}{2}} \qquad (VIII)$$

wobei

A, R, $R^1$, W, a, b und d die oben dafür angegebene Bedeutung haben,
n 0 oder 1 ist,
mit der Maßgabe, dass die Summe $a+b+d+n \leq 3$ ist und a und n in derselben Siloxaneinheit nicht gleichzeitig 1 sind und dass durchschnittlich je Molekül mindestens ein Rest W enthalten ist,
Dispersionsmittel (4) und
Emulgatoren (5), und
gegebenenfalls weitere Stoffe (6), die an der Umsetzung nicht direkt teilnehmen,
mit der Maßgabe, dass keine Metall-haltigen Katalysatoren enthalten sind und dass die Organopolysiloxane vernetzt sind und daher in Toluol unlöslich sind.

9. Dispersionen von vernetzten Organopolysiloxanen nach Anspruch 8, **dadurch gekennzeichnet, dass** als Dispersionsmittel (4) Wasser eingesetzt wird.

10. Dispersionen von vernetzten Organopolysiloxanen nach Anspruch 8 oder 9, **dadurch gekennzeichnet, dass** der Rest A ein Rest ausgewählt aus der Gruppe von

$-(CH_2)_3-NH_2$,

$-(CH_2)_3-NH-CH_3$

$-(CH_2)_3-NH-C_6H_{11}$

und

$-(CH_2)_3-NH-(CH_2)_2-NH_2$

ist.

11. Dispersionen von vernetzten Organopolysiloxanen nach Anspruch 8, 9 oder 10, **dadurch gekennzeichnet, dass** der Rest W ein Rest der Formel $-CH_2NHR^8$, $-CH_2NR^8_2$ oder $-CH_2NR^9$ ist, wobei $R^8$ einen einwertigen, gegebenenfalls N- und/oder O-Atome enthaltenden Kohlenwasserstoffrest mit 1 bis 18 Kohlenstoffatomen und $R^9$ einen zweiwertigen

gegebenenfalls N- und/oder O-Atome enthaltenden Kohlenwasserstoffrest mit 3 bis 12 Kohlenstoffatomen bedeuten.

**12.** Formkörper hergestellt durch Entfernung des Dispersionsmittel (4) von den Dispersionen gemäß einem der Ansprüche 8 bis 11.

**13.** Formkörper nach Anspruch 12, **dadurch gekennzeichnet, dass** das Dispersionsmittel (4) Wasser ist und dass die Dispersionen bei einer Temperatur von 5 bis 150°C trocknen gelassen werden.

**14.** Formkörper nach Anspruch 12 oder 13, **dadurch gekennzeichnet, dass** es sich um harte oder elastomere Formkörper handelt.

**15.** Formkörper nach Anspruch 12, 13 oder 14, **dadurch gekennzeichnet, dass** es sich um Beschichtungen oder Überzüge handelt.

**16.** Formkörper nach einem der Ansprüche 12 bis 14, **dadurch gekennzeichnet, dass** es sich um freistehende Filme und freistehende Formkörper handelt.

**17.** Formkörper nach einem der Ansprüche 12 bis 14, **dadurch gekennzeichnet, dass** es sich um Pulver handelt.

**18.** Verfahren zur Herstellung von Beschichtungen, **dadurch gekennzeichnet, dass** die Dispersion gemäß einem der Ansprüche 8 bis 11 auf ein Substrat aufgetragen wird und das Dispersionsmittel (4) entfernt wird.

**19.** Verfahren zur Imprägnierung oder Infiltration von Substraten, **dadurch gekennzeichnet, dass** die Dispersion gemäß einem der Ansprüche 8 bis 11 auf ein Substrat aufgetragen wird, das Substrat oder deren Oberfläche imprägniert oder infiltriert wird und das Dispersionsmittel (4) entfernt wird.

**Claims**

**1.** Process for preparing dispersions of crosslinked organopolysiloxanes by reacting siloxanes selected from the group consisting of siloxanes (1) composed of units of the general formula

$$A_aR_bX_cSiO_{\frac{4-(a+b+c)}{2}} \qquad (I)$$

where

**R** is a hydrogen atom or a monovalent hydrocarbon radical having 1 to 200 carbon atoms which can be substituted by halogen, amine, ammonium, mercapto, acrylate or maleimide groups,
**X** is a radical of the general formula $-OR^1$, a chlorine atom, a radical of the formula $-O^-$, where for charge compensation there may be protons and/or organic or inorganic ionic substances present,
or a radical of the general formula II

$$-(R^2)_h-[OCH_2CH_2]_e[OC_3H_6]_f[OC_4H_8]_gOR^3 \qquad (II),$$

where
**R¹** is a hydrogen atom or a hydrocarbon radical having 1 to 200 carbon atoms which may be interrupted by one or more identical or different heteroatoms selected from O, S, N and P,
**R²** is a divalent hydrocarbon radical having 1 to 200 carbon atoms which may be interrupted by one or more groups of the formulae -C (O) -, -C (O) O-, $-C(O)NR^1$, $-NR^1-$, $-N^+HR^1-$, -O-, -S- and/or or may be substituted by F, C1 or Br,
**R³** can have a definition of **R¹,** or a radical of the formulae $-C(O)R^1$ or $-Si(R^1)_3$,
**A** is a radical of the general formula III

$$-R^4(B)_z \qquad (III),$$

where

**$R^4$** is a divalent, trivalent or tetravalent hydrocarbon radical having 3 to 200 carbon atoms per radical, preferably 3 to 18 carbon atoms per radical, which may be interrupted by one or more groups of the formulae -C(O)-, -C (O)O-, $-C(O)NR^5$, $-NR^5-$, $-N^+HR^5-$, $-N^+R^5R^5-$, -O-, -S-, -(HO)P(O)- or -(NaO)P(O)- and/or may be substituted by F, Cl or Br, where
**$R^5$** is a hydrogen atom or a hydrocarbon radical having 1 to 200 carbon atoms per radical, which may be interrupted by one or more groups of the formulae -C(O)-, -C(O)O-, $-C(O)NR^1-$, $-NR^1-$, $-N^+HR^1-$, $-N^+R^1R^1-$, -O- or -S- and/or may be substituted by F, Cl or Br,
**B** can have a definition of **$R^5$** or is a radical selected from $-COO^-$, $-SO_3^-$, $-OPO_3H^{(2-y)}$, $-N^+R^5R^5R^5$, $-P^+R^5R^5R^5$, $-NR^5R^5$, -OH, -SH, F, C1, Br, -C(O)H, -COOH, $-SO_3H$, $-C_6H_4-OH$ and $-C_mF_{2m+1}$,

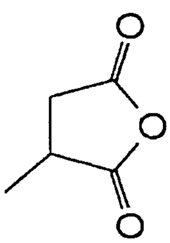 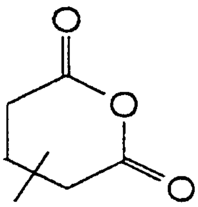 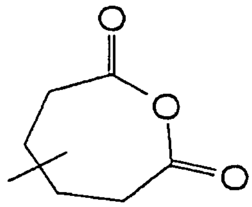

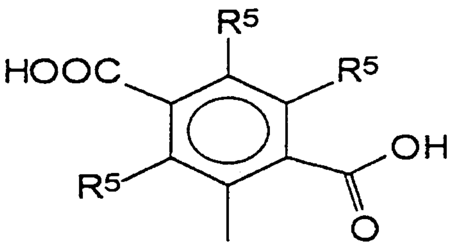

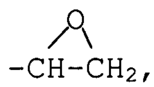

$-C(O)-CR^1=CH_2$, $-O-C(O)-CR^1=CH_2$, $-C_6H_4-(CH_2)_x-CR^1=CH_2$,

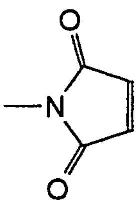 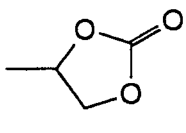 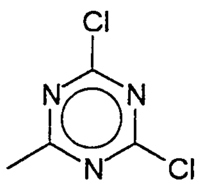

**x** is an integer 1-20,
**y** is 0 or 1,
**z,** depending on the valence of **$R^4$**, is 1, 2 or 3,
**h** is 0 or 1,
**m** is an integer 1-20,
**a, b, and c** are each 0, 1, 2 or 3, with the proviso that sum **$a + b + c \leq 3$,** and
**e, f and g** are each an integer 0-200, with the proviso that the sum **$e + f + g >$** 1,

with the proviso that there is at least one radical A per molecule and that there is at least one radical X per molecule in the definition of X equivalent to a radical $-OR^1$ where $R^1$ is a hydrogen atom,
siloxanes (2) composed of units of the general formula

$$R_b(OR^1)_dSiO_{\frac{4-(b+d)}{2}} \qquad (VI)$$

where R, $R^1$, and b are as defined above and d is able to adopt the value 0 or 1, with the proviso that the sum $b+d \leq 3$ and there is at least one radical $R^1$ per molecule in the definition of $R^1$ equivalent to hydrogen atom, and the mixtures of siloxanes (1) and (2), with silanes (3) of the general formula

$$WR_pSi(OR^7)_{3-p} \qquad (VII)$$

or hydrolysis products thereof,
**W** is a radical of the formula $-CH_2NHR^8$, $-CH_2NR^8_2$ or $-CH_2NR^9$, in which $R^8$ is a monovalent hydrocarbon radical having 1 to 18 carbon atoms, with or without N and/or O atoms, and $R^9$ is a divalent hydrocarbon radical having 3 to 12 carbon atoms, with or without N and/or O atoms,
**R** is as defined above,
**$R^7$** is an alkyl radical having 1 to 8 carbon atoms per radical, and
**p** is 0, 1 or 2, preferably 0 or 1, more preferably 0,

in the presence of dispersion media (4) and emulsifiers (5), and
if desired, of further substances (6) which do not participate directly in the reaction,
with the proviso that no metal-containing catalysts are used, and
that siloxanes (1) and/or (2) and silanes (3) are selected in terms of identity and quantity such as to give organopolysiloxanes which are crosslinked and therefore insoluble in toluene.

2. Process according to claim 1, **characterized in that** water is used as dispersion medium (4).

3. Process according to claim 1 or 2, **characterized in that** the radical A is a radical selected from the group consisting of

$-(CH_2)_3-NH_2$,

$-(CH_2)_3-NH-CH_3$,

$-(CH_2)_3-NH-C_6H_{11}$,

and

$-(CH_2)_3-NH-(CH_2)_2-NH_2$.

4. Process according to any one of claims 1 to 3, **characterized in that** siloxanes (1) used are of the general formula

$$(R^1O)R_2SiO(SiR_2O)_r(SiRAO)_sSiR_2(OR^1) \qquad (IX)$$

where

A, R, and $R^1$ are as defined in claim 1,
s is an integer from 1 to 30, and
r is 0 or an integer from 1 to 1000,
with the proviso that 50% to 100% of all radicals $R^1$ are hydrogen atoms.

5. Process according to one or more of claims 1 to 4, **characterized in that** siloxanes (2) used are those of the general formula

$$(R^1O)R_2SiO(SiR_2O)_tSiR_2(OR^1) \qquad (X)$$

where

R and $R^1$ are as defined in claim 1 and
t is an integer from 1 to 1000,
with the proviso that 50% to 100% of all radicals $R^1$ are hydrogen atoms.

6. Process according to any one of claims 1 to 5, **characterized in that** trialkoxy silanes where p is 0 are used as silanes (3).

7. Process according to any one of claims 1 to 6, **characterized in that** silane (3) is used in amounts such that there are 0.6 to 5 equivalents of $-OR^7$ per equivalent of $-OR^1$ in siloxane (1) and/or (2), $R^1$ being a hydrogen atom.

8. Dispersions of crosslinked organopolysiloxanes comprising crosslinked organopolysiloxanes composed of units of the general formula

$$A_aR_bW_n(OR^1)_dSiO_{\frac{4-(a+b+d+n)}{2}} \qquad (VIII)$$

where A, R, $R^1$, W, a, b, and d are as defined above and,
n is 0 or 1,
with the proviso that the sum $a+b+d+n \leq 3$ and a and n are not simultaneously 1 in the same siloxane unit, and that on average there is at least one radical W per molecule,
dispersion media (4), and
emulsifiers (5), and
if desired, further substances (6), which do not participate directly in the reaction,
with the proviso that there are no metal-containing catalysts present and that the organopolysiloxanes are crosslinked and therefore insoluble in toluene.

9. Dispersions of crosslinked organopolysiloxanes according to claim 8, **characterized in that** water is used as dispersion medium (4).

10. Dispersions of crosslinked organopolysiloxanes according to claim 8 or 9, **characterized in that** the radical A is a radical selected from the group consisting of

$-(CH_2)_3-NH_2$,

$-(CH_2)_3-NH-CH_3$,

$-(CH_2)_3-NH-C_6H_{11}$,

and

$-(CH_2)_3-NH-(CH_2)_2-NH_2-$

11. Dispersions of crosslinked organopolysiloxanes according to claim 8, 9 or 10, **characterized in that** the radical W is a radical of the formula $-CH_2NHR^8$, $-CH_2NR^8_2$ or $-CH_2NR^9$, in which $R^8$ is a monovalent hydrocarbon radical having 1 to 18 carbon atoms, with or without N and/or O atoms, and $R^9$ is a divalent hydrocarbon radical having 3 to 12 carbon atoms, with or without N and/or O atoms.

12. Shaped bodies produced by removing the dispersion medium (4) from the dispersions according to any one of claims 8 to 11.

13. Shaped bodies according to claim 12, **characterized in that** the dispersion medium (4) is water and **in that** the dispersions are dried at a temperature of 5 to 150°C.

**14.** Shaped bodies according to claim 12 or 13, **characterized in that** they are hard or elastomeric shaped bodies.

**15.** Shaped bodies according to claim 12, 13 or 14, **characterized in that** they are coatings or overlays.

**16.** Shaped bodies according to any one of claims 12 to 14, **characterized in that** they are self-supporting films and self-supporting shaped bodies.

**17.** Shaped bodies according to any one of claims 12 to 14, **characterized in that** they are powders.

**18.** Method of producing coatings, **characterized in that** the dispersion according to any one of claims 8 to 11 is applied to a substrate and the dispersion medium (4) is removed.

**19.** Method of impregnating or infiltrating substrates, **characterized in that** the dispersion according to any one of claims 8 to 11 is applied to a substrate, the substrate or its surface is impregnated or infiltrated, and the dispersion medium (4) is removed.

## Revendications

**1.** Procédé pour la préparation de dispersions d'organopolysiloxanes réticulés, en ce qu'on transforme des siloxanes choisis dans le groupe
des siloxanes (1) constitués d'unités de formule générale

$$A_aR_bX_cSiO_{\frac{4-(a+b+c)}{2}} \qquad (I)$$

où

R représente un atome d'hydrogène ou un radical hydrocarboné monovalent comprenant 1 à 200 atomes de carbone, qui peut être substitué par des groupes halogène, amine, ammonium, mercapto, acrylate ou maléinimide,
X représente un radical de formule générale $-OR^1$, un atome de chlore, un radical de formule -O-, où des protons et/ou des substances ioniques organiques ou inorganiques peuvent être présent(e)s pour la compensation des charges, ou un radical de formule générale II

$$-(R^2)_h-[OCH_2CH_2]_e[OC_3H_6]_f[OC_4H_8]_gOR^3 \qquad (II),$$

où
$R^1$ représente un atome d'hydrogène ou un radical hydrocarboné comprenant 1 à 200 atomes de carbone, qui peut être interrompu par un ou plusieurs hétéroatomes identiques ou différents, qui sont choisis parmi O, S, N et P,
$R^2$ représente un radical hydrocarboné divalent comprenant 1 à 200 atomes de carbone, qui peut être interrompu par un ou plusieurs groupes des formules -C(O)-, -C(O)O-, $-C(O)NR^1$, $-NR^1-$, $-N^+HR^1-$, -O-, -S- et/ou substitué par F, Cl ou Br,
$R^3$ peut présenter une signification de $R^1$, ou représente un radical des formules $-C(O)R^1$ ou $-Si(R^1)_3$,
A représente un radical de formule générale III

$$-R^4(B)_z \qquad (III),$$

où
$R^4$ représente un radical hydrocarboné divalent, trivalent ou tétravalent comprenant 3 à 200 atomes de carbone par radical, de préférence 3 à 18 atomes de carbone par radical, qui peut être interrompu par un ou plusieurs groupes des formules -C(O)-, -C(O)O-, $-C(O)NR^5$, $-NR^5-$, $-N^+HR^5-$, $-N^+R^5R^5-$, -O-, -S- -(HO)P(O)- ou -(NaO)P (O)- et/ou substitué par F, Cl ou Br, où
$R^5$ représente un atome d'hydrogène ou un radical hydrocarboné comprenant 1 à 200 atomes de carbone par radical, qui peut être interrompu par un ou plusieurs groupes des formules -C(O)-, -C(O)O-, $-C(O)NR^1-$, $-NR^1-$,

$-N^{+}HR^{1}-$, $-N^{+}R^{1}R^{1}-$, -O- ou -S- et/ou substitué par F, Cl ou Br,

B peut présenter une signification de $R^5$ ou représenter un radical qui est choisi parmi $-COO^{-}$, $-SO_3^{-}$, $-OPO_3H^{(2-y)-}$, $-N^{+}R^5R^5R^5$, $-P^{+}R^5R^5R^5$, $-NR^5R^5$, -OH, -SH, F, C1, Br, -C(O)H, -COOH, $-SO_3H$, $-C_6H_4-OH$ et $-C_mF_{2m+1}$,

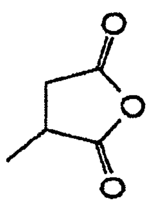
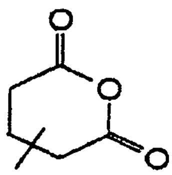
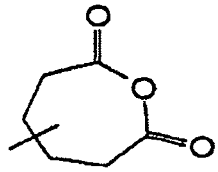

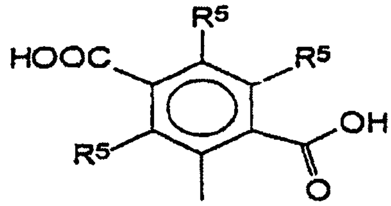

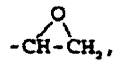

$-C(O)-CR^1=CH_2$, $-O-C(O)-CR^1=CH_2$, $-C_6H_4-(CH_2)_x-CR^1=CH_2$,

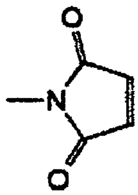
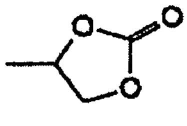
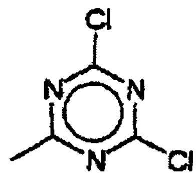

x vaut un nombre entier de 1 à 20,
y vaut 0 ou 1
z en fonction de la valence de $R^4$ vaut 1, 2 ou 3,
h vaut 0 ou 1
m vaut un nombre entier de 1 à 20,
a, b et c valent à chaque fois 0, 1, 2 ou 3, à condition que la somme $a+b+c \leq 3$, et
e, f et g représentent à chaque fois un nombre entier de 0 à 200, à condition que la somme $e+f+g > 1$,

à condition qu'au moins un radical A soit contenu par molécule et qu'au moins un radical X dans la signification de X représentant un radical $-OR^1$, où $R^1$ signifie un atome d'hydrogène, soit contenu par molécule, des siloxanes (2) constitués d'unités de formule générale

$$R_b(OR^1)_d SiO_{\frac{4-(b+d)}{2}} \quad \text{(VI)}$$

où R, $R^1$ et b ont la signification indiquée ci-dessus et d peut valoir 0 ou 1, à condition que la somme $b+d \leq 3$ et qu'au moins un radical $R^1$ dans la signification de $R^1$ représentant un atome d'hydrogène soit contenu par molécule, et des mélanges de siloxanes (1) et (2) avec des silanes (3) de formule générale

$$WR_pSi(OR^7)_{3-p} \quad (VII)$$

ou leurs produits d'hydrolyse

W représente un radical de formule $-CH_2NHR^8$, $-CH_2NR^8{}_2$ ou $-CH_2NR^9$, où $R^8$ signifie un radical hydrocarboné monovalent, contenant le cas échéant des atomes de N et/ou d'O comprenant 1 à 18 atomes de carbone et $R^9$ signifie un radical hydrocarboné divalent, contenant le cas échéant des atomes de N et/ou d'O comprenant 3 à 12 atomes de carbone,
R a la signification susmentionnée,
$R^7$ signifie un radical alkyle comprenant 1 à 8 atomes de carbone par radical et
p vaut 0, 1 ou 2, de préférence 0 ou 1, de préférence 0,

en présence de dispersants (4) et
d'émulsifiants (5) et
le cas échéant d'autres substances (6), qui ne participent pas directement à la transformation,
à condition qu'on n'utilise pas conjointement de catalyseurs contenant un métal, et
en ce que les siloxanes (1) et/ou (2) et les silanes (3) sont choisis, en type et en quantité, de manière telle qu'on obtient des organopolysiloxanes, qui sont réticulés et qui sont donc insolubles dans le toluène.

**2.** Procédé selon la revendication 1, **caractérisé en ce qu'**on utilise de l'eau comme dispersant (4).

**3.** Procédé selon la revendication 1 ou 2,
**caractérisé en ce que** le radical A est un radical choisi dans le groupe formé par

$-(CH_2)_3-NH_2$,

$-(CH_2)_3-NH-CH_3$

$-(CH_2)_3-NH-C_6H_{11}$

et

$-(CH_2)_3-NH-(CH_2)_2-NH_2$.

**4.** Procédé selon l'une quelconque des revendications 1 à 3, **caractérisé en ce qu'**on utilise comme siloxanes (1) ceux de formule générale

$$(R^1O)R_2SiO(SiR_2O)_r(SiRAO)_aSiR_2(OR^1) \quad (IX)$$

où

A, R et $R^1$ ont la signification indiquée dans la revendication 1,
s vaut un nombre entier de 1 à 30 et
r vaut 0 ou un nombre entier de 1 à 1000,
à condition que 50 à 100% de tous les radicaux $R^1$ soient des atomes d'hydrogène.

**5.** Procédé selon l'une quelconque des revendications 1 à 4, **caractérisé en ce qu'**on utilise comme siloxanes (2) ceux de formule générale

$$(R^1O)R_2SiO(SiR_2O)_tSiR_2(OR^1) \quad (X)$$

où R et $R^1$ ont la signification indiquée dans la revendication 1 et
t vaut un nombre entier de 1 à 1000.
à condition que 50 à 100% de tous les radicaux $R^1$ soient des atomes d'hydrogène.

**6.** Procédé selon l'une quelconque des revendications 1 à 5, **caractérisé en ce qu'**on utilise comme silanes (3) des trialcoxysilanes avec p valant 0.

7. Procédé selon l'une quelconque des revendications 1 à 6, **caractérisé en ce qu'**on utilise le silane (3) en des quantités telles qu'il existe 0,6 à 5 équivalents $-OR^7$ par équivalent $-OR^1$ dans le siloxane (1) et/ou (2), où $R^1$ représente un atome d'hydrogène.

8. Dispersions d'organopolysiloxanes réticulés contenant des organopolysiloxanes réticulés constitués d'unités de formule générale

$$A_aR_bW_n(OR^1)_dSiO_{\frac{4-(a+b+d+n)}{2}} \qquad \text{(VIII)}$$

où

A, R, $R^1$, W, a, b et d ont la signification indiquée ci-dessus,
n vaut 0 ou 1,
à condition que la somme a+b+d+n ≤ 3 et que a et n dans la même unité siloxane ne valent pas simultanément 1 et qu'en moyenne, par molécule, au moins un radical W soit contenu,
des dispersants (4) et
des émulsifiants (5) et
le cas échéant d'autres substances (6), qui ne participent pas directement à la transformation,
à condition que des catalyseurs contenant un métal ne soient pas contenus et que les organopolysiloxanes soient réticulés et donc insolubles dans le toluène.

9. Dispersions d'organopolysiloxanes réticulés selon la revendication 8, **caractérisées en ce qu'**on utilise de l'eau comme dispersant (4).

10. Dispersions d'organopolysiloxanes réticulés selon la revendication 8 ou 9, **caractérisées en ce que** le radical A est un radical choisi dans le groupe formé par

$-(CH_2)_3-NH_2$,

$-(CH_2)_3-NH-CH_3$

$-(CH_2)_3-NH-C_6H_{11}$

et

$-(CH_2)_3-NH-(CH_2)_2-NH_2$.

11. Dispersions d'organopolysiloxanes réticulés selon la revendication 8, 9 ou 10, **caractérisées en ce que** le radical W représente un radical de formule $-CH_2NHR^8$, $-CH_2NR^8_2$ ou $-CH_2NR^9$, où $R^8$ signifie un radical hydrocarboné monovalent, contenant le cas échéant des atomes de N et/ou d'O comprenant 1 à 18 atomes de carbone et $R^9$ signifie un radical hydrocarboné divalent, contenant le cas échéant des atomes de N et/ou d'O comprenant 3 à 12 atomes de carbone,

12. Corps façonnés préparés par élimination du dispersant (4) des dispersions selon l'une quelconque des revendications 8 à 11.

13. Corps façonnés selon la revendication 12, **caractérisés en ce que** le dispersant (4) est l'eau et **en ce qu'**on laisse sécher les dispersions à une température de 5 à 150°C.

14. Corps façonnés selon la revendication 12 ou 13, **caractérisés en ce qu'**il s'agit de corps façonnés durs ou élastomères.

15. Corps façonnés selon la revendication 12, 13 ou 14, **caractérisés en ce qu'**il s'agit de revêtements ou de recouvrements.

16. Corps façonnés selon l'une quelconque des revendications 12 à 14, **caractérisés en ce qu'**il s'agit de films autonomes et de corps façonnés autonomes.

**17.** Corps façonnés selon l'une quelconque des revendications 12 à 14, **caractérisés en ce qu'**il s'agit de poudres.

**18.** Procédé pour la préparation de revêtements, **caractérisé en ce que** la dispersion selon l'une quelconque des revendications 8 à 11 est appliquée sur un substrat et le dispersant (4) est éliminé.

**19.** Procédé pour l'imprégnation ou l'infiltration de substrats, **caractérisé en ce que** la dispersion selon l'une quelconque des revendications 8 à 11 est appliquée sur un substrat, le substrat ou sa surface est imprégné(e) ou infiltré(e) et le dispersant (4) est éliminé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5942574 A
- US 5001187 A
- US 20010027233 A1
- US 4894412 A
- EP 0874017 B1
- US 5861459 A
- EP 828794 B1
- EP 655475 B1
- DE 2500020 A
- EP 1017745 A
- DE 19742759 A
- EP 1433749 A1


### In der Beschreibung aufgeführte Nicht-Patentliteratur


- **A. ADIMA et al.** *Eur. J. Org. Chem.,* 2004, 2582-2588
- **ULLMANN'S.** Encyclopedia of Industrial Chemistry. Wiley-VCH Verlag, 2003